(19) Europäisches Patentamt
European Patent Office
Office européen des brevets

(11) **EP 4 787 660 A1**

(12) **EUROPEAN PATENT APPLICATION**
published in accordance with Art. 153(4) EPC

(43) Date of publication:
**05.08.2026 Bulletin 2026/32**

(21) Application number: **24871813.2**

(22) Date of filing: **09.09.2024**

(51) International Patent Classification (IPC):
*H02J 3/46* (2026.01)    *H02J 3/00* (2026.01)
*H02J 3/32* (2026.01)    *H02J 3/38* (2026.01)

(52) Cooperative Patent Classification (CPC):
**H02J 3/00; H02J 3/32; H02J 3/38; H02J 3/46**

(86) International application number:
**PCT/JP2024/032186**

(87) International publication number:
**WO 2025/070015 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023169317**

(71) Applicant: **Panasonic Intellectual Property
Management Co., Ltd.
Kadoma-shi, Osaka 571-0057 (JP)**

(72) Inventors:
• **OKADA, Takashi**
  **Kadoma-shi, Osaka 571-0057 (JP)**
• **IGUCHI, Yusuke**
  **Tokyo 110-005 (JP)**
• **FUKUOKA, Masaru**
  **Kadoma-shi, Osaka 571-0057 (JP)**
• **SHIMIZU, Atsushi**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **POWER CONTROL METHOD, POWER CONTROL DEVICE, AND DISTRIBUTED POWER
SUPPLY SYSTEM**

(57)    A power controlling method of the present disclosure determines power supply of a distributed power generator by using a first coefficient such that the power supply of the distributed power generator becomes larger than power demand of an electricity customer in a case of supplying electric power to a power load of the electricity customer from a distributed power source system including the distributed power generator and an electric storage device.

FIG. 3

SUPPLY ELECTRIC POWER FROM DISTRIBUTED POWER SOURCE SYSTEM TO POWER LOAD OF ELECTRICITY CUSTOMER — S1

POWER SUPPLY OF DISTRIBUTED POWER GENERATOR IS DETERMINED BY USING FIRST COEFFICIENT SUCH THAT POWER SUPPLY BECOMES LARGER THAN POWER DEMAND OF ELECTRICITY CUSTOMER — S2

EP 4 787 660 A1

## Description

Technical Field

The present disclosure relates to a power controlling method, a power control apparatus, and a distributed power source system.

Background Art

Various proposals have heretofore been made concerning power control of a distributed power source system. As an example, PTL 1 describes an act of controlling output from a fuel cell in such a way as to match a difference between power demand and output from a solar power generator and an act of absorbing an excess or a deficiency of power supply relative to power demand associated with a delay in output fluctuation of the fuel cell by charging or discharging to and from a storage battery.

Citation List

Patent Literature

PTL 1: Japanese Unexamined Patent Application Publication No. 2004-208426

Summary of Invention

Technical Problem

As an example, a problem of the present disclosure is to provide a power controlling method, a power control apparatus, and a distributed power source system, which are capable of reducing the possibility of implementation of power purchase from an electric power system as compared to the related art.

Solution to Problem

To solve the above-mentioned problem, a power controlling method of one aspect of the present disclosure determines power supply of a distributed power generator by using a first coefficient such that the power supply of the distributed power generator becomes larger than power demand of an electricity customer in a case of supplying electric power to a power load of the electricity customer from a distributed power source system including the distributed power generator and an electric storage device.
A power control apparatus of one aspect of the present disclosure includes a storage unit configured to store power demand of an electricity customer, and a control unit configured to determine power supply of a distributed power generator by using a first coefficient such that the power supply of the distributed power generator becomes larger than the power demand of the electricity customer in a case of supplying electric power from a distributed power source system including the distributed power generator and an electric storage device to a power load of the electricity customer.
A distributed power source system of one aspect of the present disclosure includes a distributed power generator, an electric storage device, and the above-mentioned power control apparatus.

Advantageous Effects of Invention

The power controlling method, the power control apparatus, and the distributed power source system according to the aspects of the present disclosure are effective for reducing the possibility of implementation of power purchase from the electric power system as compared to the related art.

Brief Description of Drawings

[Fig. 1] Fig. 1 is a diagram illustrating an example of a distributed power source system of a first embodiment.

[Fig. 2] Fig. 2 is a diagram illustrating an example of a power control apparatus of the first embodiment.

[Fig. 3] Fig. 3 is a flowchart illustrating an example of an operation by the power control apparatus (a power controlling method) of the first embodiment.

[Fig. 4A] Fig. 4A is a diagram illustrating an example of a distributed power generator provided to a distributed power source system of Example 1 of the first embodiment.

[Fig. 4B] Fig. 4B is a flowchart illustrating an example of the operation by the power control apparatus (the power controlling method) of the Example 1 of the first embodiment.

[Fig. 5A] Fig. 5A is a diagram illustrating an example of a distributed power generator provided to a distributed power source system of Example 2 of the first embodiment.

[Fig. 5B] Fig. 5B is a flowchart illustrating an example of the operation by the power control apparatus (the power controlling method) of the Example 2 of the first embodiment.

[Fig. 6A] Fig. 6A is a diagram illustrating an example of a distributed power generator provided to a distributed power source system of Example 3 of the first embodiment.

[Fig. 6B] Fig. 6B is a flowchart illustrating an example of the operation by the power control apparatus (the power controlling method) of the Example 3 of the first embodiment.

[Fig. 7A] Fig. 7A is a diagram illustrating an example of a distributed power generator provided to a distributed power source system of Example 4 of the first embodiment.

[Fig. 7B] Fig. 7B is a flowchart illustrating an example of the operation by the power control apparatus (the power controlling method) of the Example 4 of the first embodiment.

[Fig. 8A] Fig. 8A is a diagram illustrating an example of a distributed power generator provided to a distributed power source system of Example 5 of the first embodiment.

[Fig. 8B] Fig. 8B is a flowchart illustrating an example of the operation by the power control apparatus (the power controlling method) of the Example 5 of the first embodiment.

[Fig. 9A] Fig. 9A is a diagram illustrating an example of a distributed power generator provided to a distributed power source system of Example 6 of the first embodiment.

[Fig. 9B] Fig. 9B is a flowchart illustrating an example of the operation by the power control apparatus (the power controlling method) of the Example 6 of the first embodiment.

[Fig. 10A] Fig. 10A is a diagram illustrating an example of a distributed power generator provided to a distributed power source system of Example 7 of the first embodiment.

[Fig. 10B] Fig. 10B is a flowchart illustrating an example of the operation by the power control apparatus (the power controlling method) of the Example 7 of the first embodiment.

[Fig. 11A] Fig. 11A is a diagram illustrating an example of a distributed power generator provided to a distributed power source system of Example 8 of the first embodiment.

[Fig. 11B] Fig. 11B is a flowchart illustrating an example of the operation by the power control apparatus (the power controlling method) of the Example 8 of the first embodiment.

[Fig. 12A] Fig. 12A is a diagram illustrating an example of a distributed power generator provided to a distributed power source system of Example 11 of the first embodiment.

[Fig. 12B] Fig. 12B is a flowchart illustrating an example of the operation by the power control apparatus (the power controlling method) of the Example 11 of the first embodiment.

[Fig. 13A] Fig. 13A is a diagram illustrating an example of a distributed power generator provided to a distributed power source system of Example 12 of the first embodiment.

[Fig. 13B] Fig. 13B is a flowchart illustrating an example of the operation by the power control apparatus (the power controlling method) of the Example 12 of the first embodiment.

[Fig. 14A] Fig. 14A is a diagram illustrating an example of a distributed power generator provided to a distributed power source system of Example 13 of the first embodiment.

[Fig. 14B] Fig. 14B is a flowchart illustrating an example of the operation by the power control apparatus (the power controlling method) of the Example 13 of the first embodiment.

[Fig. 15A] Fig. 15A is a diagram illustrating an example of a distributed power generator provided to a distributed power source system of Example 14 of the first embodiment.

[Fig. 15B] Fig. 15B is a flowchart illustrating an example of the operation by the power control apparatus (the power controlling method) of the Example 14 of the first embodiment.

[Fig. 16A] Fig. 16A is a diagram illustrating an example of a distributed power generator provided to a distributed power source system of Example 15 of the first embodiment.

[Fig. 16B] Fig. 16B is a flowchart illustrating an example of the operation by the power control apparatus (the power controlling method) of the Example 15 of the first embodiment.

[Fig. 17A] Fig. 17A is a diagram illustrating an example of a distributed power generator provided to a distributed power source system of Example 16 of the first embodiment.

[Fig. 17B] Fig. 17B is a flowchart illustrating an example of the operation by the power control apparatus (the power controlling method) of the Example 16 of the first embodiment.

[Fig. 18] Fig. 18 is a diagram illustrating an example of a distributed power source system of a second embodiment.

[Fig. 19A] Fig. 19A is a flowchart illustrating an example of an operation for determining generated power of a fuel cell device by the power control apparatus of the second embodiment.

[Fig. 19B] Fig. 19B is a flowchart illustrating another example of the operation for determining the generated power of the fuel cell device by the power control apparatus of the second embodiment.

Description of Embodiments

Paragraph [0038] of PTL 1 discloses issuance of a control command so as to increase fuel cell output up to a required fuel cell output current computed from a solar cell output current and a load current in a case of shortage of generated power due to an increase in load or a decrease in power-generating capacity, and performance of power control in such a way as to discharge power from an electric storage device due to the occurrence of a time delay until an actual increase in output.

However, the invention disclosed in PTL 1 has not been sufficiently investigated in light of suppression of the power purchase from the electric power system. For example, when an electric storage device is in a state of full charge or a state close thereto, there is a possibility of the occurrence of the power purchase from the electric power system due to a time delay in a change in output from the fuel cell.

Accordingly, a power controlling method of a first aspect of the present disclosure determines power supply of a distributed power generator by using a first coefficient such that the power supply of the distributed power generator becomes larger than power demand of an electricity customer in a case of supplying electric power to a power load of the electricity customer from a distributed power source system including the distributed power generator and an electric storage device.

According to the above description, the power controlling method of the present aspect can reduce the possibility of implementation of the power purchase from the electric power system as compared to the related art.

Specifically, although a possibility of causing a reverse power flow to the electric power system may be increased, the power controlling method of the present aspect allows for this possibility and determines the power supply of the distributed power generator by using the first coefficient such that the power supply of the distributed power generator becomes larger than the power demand of the electricity customer. Accordingly, the power controlling method of the present aspect can appropriately suppress the power purchase from the electric power system by the distributed power source system as compared to a case in which the power supply of the distributed power generator is not determined by using the first coefficient.

A power controlling method of a second aspect of the present disclosure is the power controlling method of the first aspect, in which the distributed power generator may include a solar power generator and a fuel cell device, and may determine a planned value of generated power of the fuel cell device in such a way as to satisfy a difference between a value increased by multiplying a predicted value of the power demand or actual power demand of the electricity customer by a first coefficient $\alpha$ and a predicted value of electric power or actual generated power of the solar power generator.

Generated power of the fuel cell device (hereinafter referred to as generated power of the present aspect) calculated from the difference between the value increased by multiplying the predicted value of power demand or the actual power demand of the electricity customer by the first coefficient $\alpha$ and the predicted value of electric power or the actual generated power of the solar power generator is larger as compared to generated power of the fuel cell device (hereinafter referred to as generated power of a comparative example) calculated from a difference between the predicted value of power demand or the actual power demand of the electricity customer and the predicted value of electric power or the actual generated power of the solar power generator.

Here, the "generated power of the comparative example" corresponds to electric power that is unlikely to induce the power purchase from the electric power system. That is to say, the "generated power of the present aspect" is electric power which is further increased from the electric power that is unlikely to induce the power purchase from the electric power system by using the first coefficient $\alpha$.

For this reason, the power controlling method of the present aspect determines the planned value of the generated power of the fuel cell device in such a way as to satisfy the difference between the value increased by multiplying the predicted value of the power demand or the actual power demand of the electricity customer by the first coefficient $\alpha$ and the predicted value of the electric power or the actual generated power of the solar power generator, and can therefore appropriately suppress the power purchase from the electric power system by the distributed power source system as compared to a case where the planned value of the generated power of the fuel cell device is determined without increasing the predicted value of the power demand or the actual power demand of the electricity customer.

A power controlling method of a third aspect of the present disclosure is the power controlling method of the first aspect or the second aspect, in which the distributed power generator may include a solar power generator and a fuel cell device, and a value obtained by adding up a planned value of generated power of the fuel cell device and a correction value for the planned value based on actual power demand of the electricity customer, actual generated power of the solar power generator, and the planned value of the generated power of the fuel cell device, and being increased by multiplying by the first coefficient $\beta$ may be determined as the generated power of the fuel cell device.

In the case where the distributed power generator includes the solar power generator and the fuel cell device, the value obtained by adding up the planned value of the generated power of the fuel cell device and the correction value for the planned value corresponds to the generated power of the fuel cell device which is unlikely to induce the power purchase from the electric power system. That is to say, the value obtained by increasing total electric power of the above-mentioned planned value and the correction value for the planned value by multiplying by the first coefficient $\beta$ is electric power which is further increased from the generated power that is unlikely to induce the power purchase from the electric power system by using the first coefficient $\beta$.

For this reason, by determining the value obtained by adding up the planned value of the generated power of the fuel cell device and the correction value for the planned value and being increased by multiplying by the first coefficient $\beta$ as the generated power of the fuel cell device, the power controlling method of the present aspect can appropriately suppress the power purchase from the electric power system by the distributed power source system as compared to a case in which the generated power of the fuel cell device is determined without increasing the correction value.

A power controlling method of a fourth aspect of the present disclosure is the power controlling method of the first aspect or the second aspect, in which the distributed power generator may include a fuel cell device, and a value obtained by adding up a planned value of generated power of the fuel cell device and a correction value for the planned value based on actual power demand of the electricity customer and the planned value of the generated power of the fuel cell device, and being increased by multiplying by the first coefficient $\beta$ may be determined as the generated power of the fuel cell device.

In the case where the distributed power generator includes the fuel cell device, the value obtained by adding up the planned value of the generated power of the fuel cell device and the correction value for the planned value corresponds to the generated power of the fuel cell device which is unlikely to induce the power purchase from the electric power system. That is to say, the value obtained by increasing total electric power of the above-mentioned planned value and the correction value for the planned value by multiplying by the first coefficient $\beta$ is electric power which is further increased from the generated power that is unlikely to induce the power purchase from the electric power system by using the first coefficient $\beta$.

**EP 4 787 660 A1**

For this reason, by determining the value obtained by adding up the planned value of the generated power of the fuel cell device and the correction value for the planned value and being increased by multiplying by the first coefficient β as the generated power of the fuel cell device, the power controlling method of the present aspect can appropriately suppress the power purchase from the electric power system by the distributed power source system as compared to a case in which the generated power of the fuel cell device is determined without multiplying by the first coefficient β.

A power controlling method of a fifth aspect of the present disclosure is the power controlling method of the first aspect or the second aspect, in which the distributed power generator may include a solar power generator and a fuel cell device, and a value obtained by increasing a value less than or equal to a difference between a sum of actual power demand of the electricity customer and chargeable power less than or equal to maximum charged power of the electric storage device, and actual generated power of the fuel cell device by multiplying by the first coefficient γ may be determined as a power generation upper limit of the solar power generator.

In the case where the distributed power generator includes the solar power generator and the fuel cell device, the value less than or equal to the difference between the sum of the actual power demand of the electricity customer and the chargeable power less than or equal to the maximum charged power of the electric storage device, and the actual generated power of the fuel cell device corresponds to the generated power of the solar power generator that is unlikely to induce the power purchase from the electric power system. That is to say, the value obtained by increasing the above-mentioned value less than or equal to the difference by multiplying by the first coefficient γ is electric power which is further increased from the generated power that is unlikely to induce the power purchase from the electric power system by using the first coefficient β.

For this reason, by determining the value obtained by increasing the value less than or equal to the difference between the sum of the actual power demand of the electricity customer and the chargeable power less than or equal to the maximum charged power of the electric storage device, and the actual generated power of the fuel cell device by multiplying by the first coefficient γ as the power generation upper limit of the solar power generator, the power controlling method of the present aspect can appropriately suppress the power purchase from the electric power system by the distributed power source system as compared to a case in which the power generation upper limit of the solar power generator is determined without increasing the value less than or equal to the difference.

A power controlling method of a sixth aspect of the present disclosure is the power controlling method of the first aspect or the second aspect, in which the distributed power generator may include a solar power generator, and a value obtained by increasing a value less than or equal to a sum of actual power demand of the electricity customer and chargeable power less than or equal to maximum charged power of the electric storage device by multiplying by the first coefficient γ may be determined as a power generation upper limit of the solar power generator.

In the case where the distributed power generator includes the solar power generator, the value less than or equal to the sum of the actual power demand of the electricity customer and the chargeable power less than or equal to the maximum charged power of the electric storage device corresponds to the generated power of the solar power generator that is unlikely to induce the power purchase from the electric power system. That is to say, the value obtained by increasing the above-mentioned value less than or equal to the sum by multiplying by the first coefficient γ is electric power which is further increased from the generated power that is unlikely to induce the power purchase from the electric power system by using the first coefficient γ.

For this reason, by determining the value obtained by increasing the value less than or equal to the sum of the actual power demand of the electricity customer and the chargeable power less than or equal to the maximum charged power of the electric storage device by multiplying by the first coefficient γ as the power generation upper limit of the solar power generator, the power controlling method of the present aspect can appropriately suppress the power purchase from the electric power system by the distributed power source system as compared to a case in which the power generation upper limit of the solar power generator is determined without increasing the value less than or equal to the sum.

A power controlling method of a seventh aspect of the present disclosure is the power controlling method of the first aspect or the second aspect, in which the distributed power generator may include a solar power generator and a fuel cell device, and a value obtained by increasing a difference between actual power demand of the electricity customer and a sum of actual generated power of the solar power generator and actual generated power of the fuel cell device by multiplying by a second coefficient δ may be determined as any of charged power and discharged power of the electric storage device.

In the case where the distributed power generator includes the solar power generator and the fuel cell device, the difference between the actual power demand of the electricity customer and the sum of the actual generated power of the solar power generator and the actual generated power of the fuel cell device corresponds to the charged power or the discharged power of the electric storage device which is unlikely to induce the power purchase from the electric power system. That is to say, the value obtained by increasing the above-mentioned difference by multiplying by the second coefficient δ is electric power which is further increased from the electric power that is unlikely to induce the power purchase from the electric power system by using the second coefficient δ.

For this reason, by determining the value obtained by increasing the difference between the actual power

6

demand of the electricity customer and the sum of the actual generated power of the solar power generator and the actual generated power of the fuel cell device by multiplying by the second coefficient $\delta$ as the charged power or the discharged power of the electric storage device, the power controlling method of the present aspect can appropriately suppress the power purchase from the electric power system by the distributed power source system as compared to a case in which the charged power or the discharged power of the electric storage device is determined without increasing the difference.

A power controlling method of an eighth aspect of the present disclosure is the power controlling method of the first aspect or the second aspect, in which the distributed power generator may include a solar power generator, and a value obtained by increasing a difference between actual power demand of the electricity customer and actual generated power of the solar power generator by multiplying by a second coefficient $\delta$ may be determined as any of charged power and discharged power of the electric storage device.

In the case where the distributed power generator includes the solar power generator, the difference between the actual power demand of the electricity customer and the actual generated power of the solar power generator corresponds to the charged power or the discharged power of the electric storage device which is unlikely to induce the power purchase from the electric power system. That is to say, the value obtained by increasing the above-mentioned difference by multiplying by the second coefficient $\delta$ is electric power which is further increased from the electric power that is unlikely to induce the power purchase from the electric power system by using the second coefficient $\delta$.

For this reason, by determining the value obtained by increasing the difference between the actual power demand of the electricity customer and the actual generated power of the solar power generator by multiplying by the second coefficient $\delta$ as the charged power or the discharged power of the electric storage device, the power controlling method of the present aspect can appropriately suppress the power purchase from the electric power system by the distributed power source system as compared to a case in which the charged power or the discharged power of the electric storage device is determined without increasing the difference.

A power controlling method of a ninth aspect of the present disclosure is the power controlling method of the first aspect or the second aspect, in which the distributed power generator may include a fuel cell device, and a value obtained by increasing a difference between actual power demand of the electricity customer and actual generated power of the fuel cell device by multiplying by a second coefficient $\delta$ may be determined as any of charged power and discharged power of the electric storage device.

In the case where the distributed power generator includes the fuel cell device, the difference between the actual power demand of the electricity customer and the actual generated power of the fuel cell device corresponds to the charged power or the discharged power of the electric storage device which is unlikely to induce the power purchase from the electric power system. That is to say, the value obtained by increasing the above-mentioned difference by multiplying by the second coefficient $\delta$ is electric power which is further increased from the electric power that is unlikely to induce the power purchase from the electric power system by using the second coefficient $\delta$.

For this reason, by determining the value obtained by increasing the difference between the actual power demand of the electricity customer and the actual generated power of the fuel cell device by multiplying by the second coefficient $\delta$ as the charged power or the discharged power of the electric storage device, the power controlling method of the present aspect can appropriately suppress the power purchase from the electric power system by the distributed power source system as compared to a case in which the charged power or the discharged power of the electric storage device is determined without increasing the difference.

A power controlling method of a tenth aspect of the present disclosure is the power controlling method of any one of the first aspect to the sixth aspect, in which the first coefficient may vary with seasons.

In general, the generated power of the solar power generator and the power demand of the electricity customer vary with the seasons. For this reason, by setting the first coefficient to a desired value depending on the seasons, the power controlling method of the present aspect can decrease an amount of power of the power purchase from the electric power system as compared to a case in which the first coefficient is constant in every season.

A power controlling method of an eleventh aspect of the present disclosure is the power controlling method of any one of the seventh aspect to the ninth aspect, in which the second coefficient may vary with seasons.

In general, the generated power of the solar power generator and the power demand of the electricity customer vary with the seasons. For this reason, by setting the second coefficient to a desired value depending on the seasons, the power controlling method of the present aspect can decrease the amount of power of the power purchase from the electric power system as compared to a case in which the second coefficient is constant in every season.

A power controlling method of a twelfth aspect of the present disclosure is the power controlling method of the first aspect or the second aspect, in which the distributed power generator may include a solar power generator and a fuel cell device, and may execute any of first control of determining a value obtained by adding up a planned value of generated power of the fuel cell device and a correction value for the planned value based on actual power demand of the electricity customer, actual generated power of the solar power generator, and the planned value of the generated power of the fuel cell device, and being increased by multiplying by the first coefficient $\beta$ as the generated power of the fuel cell device, and second control of determining a value obtained by increasing a difference between the actual power demand of the electricity customer and a sum of the actual generated power of the solar power generator and actual generated power of the fuel cell device by multiplying by a second coefficient $\delta$ as any of charged power and discharged power of the electric storage device. The first coefficient $\beta$ may be larger than the second coefficient $\delta$.

As described above, by executing the first control of determining the value obtained by adding up the planned value of the generated power of the fuel cell device and the correction value for the planned value increased by multiplying by the first coefficient $\beta$ as the generated power of the fuel cell device, the power controlling method of the present aspect can appropriately suppress the power purchase from the electric power system by the distributed power source system as compared to a case of executing the control of determining the generated power of the fuel cell device without multiplying by the first coefficient $\beta$.

In the meantime, as described above, by executing the second control of determining the value obtained by increasing the difference between the actual power demand of the electricity customer and the sum of the actual generated power of the solar power generator and the actual generated power of the fuel cell device by multiplying by the second coefficient $\delta$ as the charged power or the discharged power of the electric storage device, the power controlling method of the present aspect can appropriately suppress the power purchase from the electric power source system as compared to a case of executing the control of determining the charged power or the discharged power of the electric storage device without increasing the difference.

Here, assuming that the magnitudes of the first coefficient and the second coefficient are equal, it is highly likely that the operation and effect of the former first control for suppressing the power purchase from the electric power system is larger than the operation and effect of the latter second control. This is because the major portion of the power demand of the electricity customer is generally covered by the power supply from the distributed power generator while the remaining portion is covered by the charged power or the discharged power of the electric storage device, and the generated power of the fuel cell device therefore tends to be larger than the charged power or the discharged power of the electric storage device as a consequence.

Accordingly, by setting the first coefficient $\beta$ in the first control larger than the second coefficient $\delta$ in the second control as in the power controlling method of the present aspect, it is possible to appropriately suppress the power purchase from the electric power system by the distributed power source system as compared to a case in which the magnitudes of the two values are equal or the magnitude relation between the two values is reversed.

A power controlling method of a thirteenth aspect of the present disclosure is the power controlling method of the first aspect or the second aspect, in which the distributed power generator may include a fuel cell device, and may execute any of first control of determining a value obtained by adding up a planned value of generated power of the fuel cell device and a correction value for the planned value based on actual power demand of the electricity customer and the planned value of the generated power of the fuel cell device, and being increased by multiplying by the first coefficient $\beta$ as the generated power of the fuel cell device, and second control of determining a value obtained by increasing a difference between the actual power demand of the electricity customer and actual generated power of the fuel cell device by multiplying by the second coefficient $\delta$ as any of charged power and discharged power of the electric storage device. The first coefficient $\beta$ may be larger than the second coefficient $\delta$.

As described above, by executing the first control of determining the value obtained by adding up the planned value of the generated power of the fuel cell device and the correction value for the planned value and being increased by multiplying by the first coefficient $\beta$ as the generated power of the fuel cell device, the power controlling method of the present aspect can appropriately suppress the power purchase from the electric power system by the distributed power source system as compared to a case of executing the control of determining the generated power of the fuel cell device without multiplying by the first coefficient $\beta$.

In the meantime, as described above, by executing the second control of determining the value obtained by increasing the difference between the actual power demand of the electricity customer and the actual generated power of the fuel cell device by multiplying by the second coefficient $\delta$ as the charged power or the discharged power of the electric storage device, the power controlling method of the present aspect can appropriately suppress the power purchase from the electric power system by the distributed power source system as compared to a case of executing the control of determining the charged power or the discharged power of the electric storage device without increasing the difference.

Here, assuming that the magnitudes of the first coefficient and the second coefficient are equal, it is highly likely that the operation and effect of the former first control for suppressing the power purchase from the electric power system is larger than the operation and effect of the latter second control. This is because the major portion of the power demand of the electricity customer is generally covered by the power supply from the distributed power generator while the remaining portion is covered by the charged power or the discharged power of the electric storage device, and the generated power of the fuel cell device therefore tends to be larger than the charged power or the discharged power of the electric storage device as a consequence.

Accordingly, by setting the first coefficient $\beta$ in the first control larger than the second coefficient $\delta$ in the second control as in the power controlling method of the present aspect, it is possible to appropriately suppress the power purchase from the electric power system by the distributed power source system as compared to a case in which the magnitudes of the two values are equal or the magnitude relation between the two values is reversed.

A power controlling method of a fourteenth aspect of the present disclosure is the power controlling method of the first aspect or the second aspect, in which the distributed power generator may include a solar power generator and a fuel cell device, and may execute any of first control of determining a value obtained by increasing a value less than or equal to a difference between a sum of actual power demand of the electricity customer and chargeable power less than or equal to maximum charged power of the electric storage device, and actual generated power of the fuel cell device by multiplying by the first coefficient $\gamma$ as a power generation upper limit of the solar power generator, and second control of determining a value obtained by increasing a difference between the actual power demand of the electricity customer and a sum of actual generated power of the solar power generator and the actual generated power of the fuel cell device by multiplying by the second coefficient $\delta$ as any of charged power and discharged power of the electric storage device. The first coefficient $\gamma$ may be larger than the second coefficient $\delta$.

As described above, by executing the first control of determining the value obtained by increasing the value less than or equal to the difference between the sum of the actual power demand of the electricity customer and the chargeable power less than or equal to the maximum charged power of the electric storage device, and the actual generated power of the fuel cell device by multiplying by the first coefficient $\gamma$ as the power generation upper limit of the solar power generator, the power controlling method of the present aspect can appropriately suppress the power purchase from the electric power system by the distributed power source system as compared to a case of executing the control of determining the power generation upper limit of the solar power generator without increasing the value less than or equal to the difference.

In the meantime, as described above, by executing the second control of determining the value obtained by increasing the difference between the actual power demand of the electricity customer and the sum of the actual generated power of the solar power generator and the actual generated power of the fuel cell device by multiplying by the second coefficient $\delta$ as the charged power or the discharged power of the electric storage device, the power controlling method of the present aspect can appropriately suppress the power purchase from the electric power system by the distributed power source system as compared to a case of executing the control of determining the charged power or the discharged power of the electric storage device without increasing the difference.

Here, assuming that the magnitudes of the first coefficient and the second coefficient are equal, it is highly likely that the operation and effect of the former first control for suppressing the power purchase from the electric power system is larger than the operation and effect of the latter second control. This is because the major portion of the power demand of the electricity customer is generally covered by the power supply from the distributed power generator while the remaining portion is covered by the charged power or the discharged power of the electric storage device, and the generated power of the solar power generator therefore tends to be larger than the charged power or the discharged power of the electric storage device as a consequence.

Accordingly, by setting the first coefficient $\gamma$ in the first control larger than the second coefficient $\delta$ in the second control as in the power controlling method of the present aspect, it is possible to appropriately suppress the power purchase from the electric power system by the distributed power source system as compared to a case in which the magnitudes of the two values are equal or the magnitude relation between the two values is reversed.

A power controlling method of a fifteenth aspect of the present disclosure is the power controlling method of the first aspect or the second aspect, in which the distributed power generator may include a solar power generator, and may execute any of first control of determining a value obtained by increasing a value less than or equal to a sum of actual power demand of the electricity customer and chargeable power less than or equal to maximum charged power of the electric storage device by multiplying by the first coefficient $\gamma$ as a power generation upper limit of the solar power generator, and second control of determining a value obtained by increasing a difference between the actual power demand of the electricity customer and actual generated power of the solar power generator by multiplying by the second coefficient $\delta$ as any of charged power and discharged power of the electric storage device. The first coefficient $\gamma$ may be larger than the second coefficient $\delta$.

As described above, by executing the first control of determining the value obtained by increasing the value less than or equal to the sum of the actual power demand of the electricity customer and the chargeable power less than or equal to the maximum charged power of the electric storage device by multiplying by the first coefficient $\gamma$ as the power generation upper limit of the solar power generator, the power controlling method of the present aspect can appropriately suppress the power purchase from the electric power system by the distributed power source system as compared to a case of executing the control of determining the power generation upper limit of the solar power generator without increasing the value less than or equal to the sum.

In the meantime, as described above, by executing the second control of determining the value obtained by increasing the difference between the actual power demand of the electricity customer and the actual generated power of the solar power generator by multiplying by the second coefficient $\delta$ as the charged power or the discharged power of the electric storage device, the power controlling method of the present aspect can appropriately suppress the power purchase from the electric power system by the distributed power source system as compared to a case of executing the control of determining the charged power or the discharged power of the electric storage device without increasing the difference.

Here, assuming that the magnitudes of the first coefficient and the second coefficient are equal, it is highly likely that the operation and effect of the former first control for suppressing the power purchase from the electric power system is larger than the operation and effect of the latter second control. This is because the major portion of the power demand of the electricity customer is generally covered by the power supply from the distributed power generator while the remaining portion is covered by the charged power or the discharged power of the electric storage device, and the generated power of the solar power generator therefore tends to be larger than the charged power or the discharged power of the electric storage device as a consequence.

Accordingly, by setting the first coefficient $\gamma$ in the first control larger than the second coefficient $\delta$ in the second control as in the power controlling method of the present aspect, it is possible to appropriately suppress the power purchase from the electric power system by the distributed power source system as compared to a case in which the magnitudes of the two values are equal or the magnitude relation between the two values is reversed.

A power controlling method of a sixteenth aspect of the present disclosure is the power controlling method of the first aspect, in which the distributed power generator may include a fuel cell device, and when one of the fuel cell device and the electric storage device causes an abnormal stop, any of the first coefficient and the second coefficient used for determining power supply of another one of the fuel cell device and the electric storage device may be changed to a different value from a value before the abnormal stop.

In the case where the distributed power generator includes the fuel cell device, the power purchase from the electric power system by the distributed power source system may be brought about when one of the fuel cell device and the electric storage device causes the abnormal stop. For this reason, in the case where one of the fuel cell device and the electric storage device causes the abnormal stop, the first coefficient or the second coefficient used for determining the power supply of the other one of the fuel cell device and the electric storage device is changed to a desired value that is different from the value before the abnormal stop. Thus, the power controlling method of the present aspect can appropriately suppress the power purchase from the electric power system by the distributed power source system as compared to a case in which these coefficients are equal at the points before and after the abnormal stop.

A power controlling method of a seventeenth aspect of the present disclosure is the power controlling method of the first aspect, in which the distributed power generator may include a solar power generator, and when one of the solar power generator and the electric storage device causes an abnormal stop, any of the first coefficient and the second coefficient used for determining power supply of another one of the solar power generator and the electric storage device may be changed to a different value from a value before the abnormal stop.

In the case where the distributed power generator includes the solar power generator, the power purchase from the electric power system by the distributed power source system may be brought about when one of the solar power generator and the electric storage device causes the abnormal stop. For this reason, in the case where one of the solar power generator and the electric storage device causes the abnormal stop, the first coefficient or the second coefficient used for determining the power supply of the other one of the solar power generator and the electric storage device is changed to the different value from the value before the abnormal stop. Thus, the power controlling method of the present aspect can appropriately suppress the power purchase from the electric power system by the distributed power source system as compared to a case in which these coefficients are equal at the points before and after the abnormal stop.

A power control apparatus of an eighteenth aspect of the present disclosure includes a storage unit configured to store power demand of an electricity customer, and a control unit configured to determine power supply of a distributed power generator by using a first coefficient such that the power supply of the distributed power generator becomes larger than the power demand of the electricity customer in a case of supplying electric power from a distributed power source system including the distributed power generator and an electric storage device to a power load of the electricity customer.

According to the above-described configuration, the power control apparatus of the present aspect can reduce the possibility of implementation of power purchase from the electric power system as compared to the related art. Here, details of the operation and effect exerted by the power control apparatus of the present aspect are the same as the operation and effect exerted by the power controlling method of the first aspect and explanations thereof will be omitted.

A distributed power source system of a nineteenth aspect of the present disclosure includes a distributed power generator, an electric storage device, and the power control apparatus of the eighteenth aspect.

According to the above-described configuration, the distributed power source system of the present aspect can reduce the possibility of implementation of power purchase from the electric power system as compared to the related art. Here, details of the operation and effect exerted by the distributed power source system of the present aspect are the same as the operation and effect exerted by the power controlling method of the first aspect and explanations thereof will be omitted.

<More aspects of present disclosure>

If at least one of the first coefficient $\alpha$, the first coefficient $\beta$, the first coefficient $\gamma$, and the second coefficient $\delta$ is a value larger than "1", the operation and effect for suppressing the power purchase from the electric power system can be exerted even when the rest of the coefficients are equal to "1". From this point of view, it is possible to further develop the following aspects of the present disclosure, respectively.

In a case of supplying electric power from a distributed power source system including a solar power generator, a fuel cell device, and an electric storage device to a power load of an electricity customer, a power controlling method of a twentieth aspect of the present disclosure determines a value obtained by adding up a planned value of generated power of the fuel cell device and a correction value for the planned value based on actual power demand of the electricity customer, actual generated power of the solar power generator, and the planned value of the generated power of the fuel cell device, and being increased by multiplying by the first coefficient $\beta$ as the generated power of the fuel cell device.

According to the above-described configuration, the power control apparatus of the present aspect can reduce the possibility of implementation of power purchase from the electric power system as compared to the related art. Here, details of the operation and effect exerted by the power control apparatus of the present aspect are the same as the operation and effect exerted by the power controlling method of the third aspect and explanations thereof will be omitted.

In a case of supplying electric power from a distributed power source system including a fuel cell device and an electric storage device to a power load of an electricity customer, a power controlling method of a twenty-first aspect of the present disclosure determines a value obtained by adding up a planned value of generated power of the fuel cell device and a correction value for the planned value based on actual power demand of the electricity customer and the planned value of the generated power of the fuel cell device, and being increased by multiplying by the first coefficient $\beta$ as the generated power of the fuel cell device.

According to the above-described configuration, the power control apparatus of the present aspect can reduce the possibility of implementation of power purchase from the electric power system as compared to the related art. Here, details of the operation and effect exerted by the power control apparatus of the present aspect are the same as the operation and effect exerted by the power controlling method of the fourth aspect and explanations thereof will be omitted.

In a case of supplying electric power from a distributed power source system including a solar power generator, a fuel cell device, and an electric storage device to a power load of an electricity customer, a power controlling method of a twenty-second aspect of the present disclosure determines a value obtained by increasing a value less than or equal to a difference between a sum of actual power demand of the electricity customer and chargeable power less than or equal to maximum charged power of the electric storage device, and actual generated power of the fuel cell device by multiplying by the first coefficient $\gamma$ as a power generation upper limit of the solar power generator.

According to the above-described configuration, the power control apparatus of the present aspect can reduce the possibility of implementation of power purchase from the electric power system as compared to the related art. Here, details of the operation and effect exerted by the power controlling method of the present aspect are the same as the operation and effect exerted by the power control apparatus of the fifth aspect and explanations thereof will be omitted.

In a case of supplying electric power from a distributed power source system including a solar power generator and an electric storage device to a power load of an electricity customer, a power controlling method of a twenty-third aspect of the present disclosure determines a value obtained by increasing a value less than or equal to a sum of actual power demand of the electricity customer and chargeable power less than or equal to maximum charged power of the electric storage device by multiplying by the first coefficient $\gamma$ as a power generation upper limit of the solar power generator.

According to the above-described configuration, the power control apparatus of the present aspect can reduce the possibility of implementation of power purchase from the electric power system as compared to the related art. Here, details of the operation and effect exerted by the power control apparatus of the present aspect are the same as the operation and effect exerted by the power controlling method of the sixth aspect and explanations thereof will be omitted.

In a case of supplying electric power from a distributed power source system including a solar power generator, a fuel cell device, and an electric storage device to a power load of an electricity customer, a power controlling method of a twenty-fourth aspect of the present disclosure determines a value obtained by increasing a difference between actual power demand of the electricity customer and a sum of actual generated power of the solar power generator and actual generated power of the fuel cell device by multiplying by a second coefficient $\delta$ as any of charged power and discharged power of the electric storage device.

According to the above-described configuration, the power control apparatus of the present aspect can reduce the possibility of implementation of power purchase from the electric power system as compared to the related art. Here, details of the operation and effect exerted by the power controlling method of the present aspect are the same as the operation and effect exerted by the power control apparatus of the seventh aspect and explanations thereof will be omitted.

In a case of supplying electric power from a distributed power source system including a solar power generator and an electric storage device to a power load of an electricity customer, a power controlling method of a twenty-fifth aspect of the present disclosure determines a value obtained by increasing a difference between actual power demand of the electricity customer and actual generated power of the solar power generator by multiplying by a second coefficient $\delta$ as any of charged power and discharged power of the electric storage device.

According to the above-described configuration, the power control apparatus of the present aspect can reduce the possibility of implementation of power purchase from the electric power system as compared to the related art. Here, details of the operation and effect exerted by the power controlling method of the present aspect are the same as the operation and effect exerted by the power control apparatus of the eighth aspect and explanations thereof will be omitted.

In a case of supplying electric power from a distributed power source system including a fuel cell device and an electric storage device to a power load of an electricity customer, a power controlling method of a twenty-sixth aspect of the present disclosure determines a value obtained by increasing a difference between actual power demand of the electricity customer and actual generated power of the fuel cell device by multiplying by a second coefficient $\delta$ as any of charged power and discharged power of the electric storage device.

According to the above-described configuration, the power control apparatus of the present aspect can reduce the possibility of implementation of power purchase from the electric power system as compared to the related art. Here, details of the operation and effect exerted by the power control apparatus of the present aspect are the same as the operation and effect exerted by the power controlling method of the ninth aspect and explanations thereof will be omitted.

Specific examples of the above-mentioned aspects of the present disclosure will be described below with reference to the accompanying drawings. Each of the specific examples described below represents one example of the above-mentioned aspects of the present disclosure. Accordingly, shapes, numerical values, constituents, layout positions as well as modes of connection of the constituents, and the like discussed below are not intended to limit the scope of the claims unless stated so in the claims.

Meanwhile, among the constituents to be described below, a constituent which is not described in an independent claim that represents the broadest concept of the present disclosure will be explained as an optional constituent. In the meantime, explanations of those denoted by the same reference signs in the drawings may be omitted in some cases. The drawings schematically illustrate the respective constituents in order to facilitate the understanding, and shapes, dimensional ratios, and the like may be displayed inaccurately in some cases.

In addition, as for an operation of an apparatus, the order of the steps may be changed or a publicly-known step may be added thereto as needed.

(FIRST EMBODIMENT)

[Apparatus configuration]

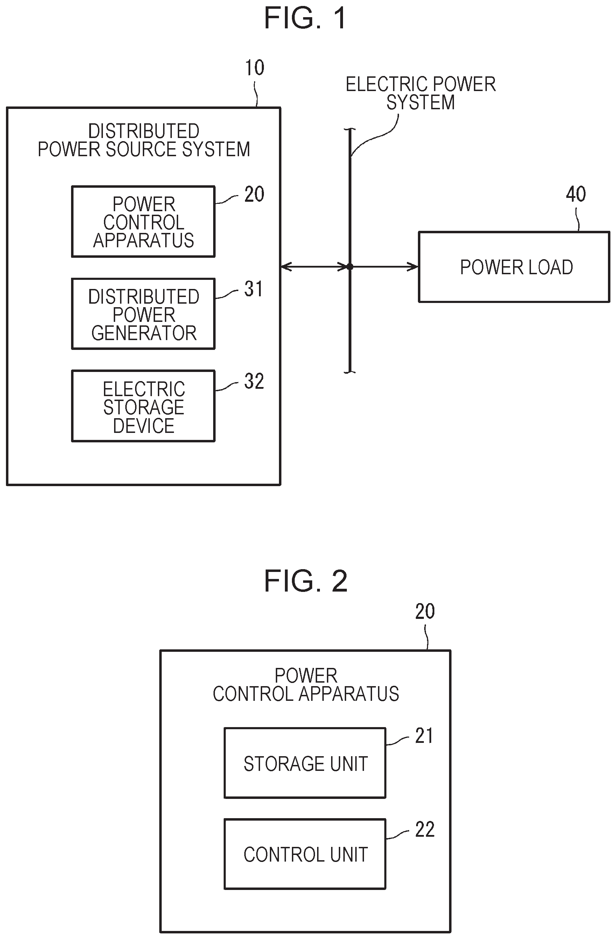

Fig. 1 is a diagram illustrating an example of a distributed power source system of a first embodiment. Fig. 2 is a diagram illustrating an example of a power control apparatus of the first embodiment.

As illustrated in Fig. 1, a distributed power source system 10 of the present embodiment includes a power control apparatus 20, a distributed power generator 31, and an electric storage device 32. Note that a specific configuration of the distributed power generator 31 will be described in Examples.

The electric storage device 32 is a device configured to store either electric power generated by the distributed power generator 31 or electric power received from an electric power system by control of the power control apparatus 20. The electric power stored in the electric storage device 32 may be discharged to a power load 40 of an electricity customer or to the electric power system by control of the power control apparatus 20. The electric storage device 32 can transmit a charging rate SOC (state of charge) that indicates a remaining quantity of an amount of power (an amount of charges) stored in the electric storage device 32, and the like to the power control apparatus 20 at an appropriate time. A well-known secondary battery and the like can be cited as an example of the electric storage device 32. However, the electric storage device 32 is not limited thereto. Here, the electric storage device 32 includes a storage battery unit cluster formed from multiple storage battery units. A detailed configuration of the electric storage device 32 will be described in a second embodiment.

As illustrated in Fig. 2, the power control apparatus 20 includes a storage unit 21 and a control unit 22.

The storage unit 21 is a memory for storing power demand of the electricity customer.

Here, the "electricity customer" is an owner of the power load 40 that receives service of supply of the electric power generated by the distributed power source system 10. Examples of the "electricity customer" include a factory, a store, a general household, and the like, but are not limited thereto.

When the electric power is supplied from the distributed power source system 10 to the power load 40 of the electricity customer, the control unit 22 determines power supply of the distributed power generator 31 by using a first coefficient such that the power supply of the distributed power generator 31 becomes larger than the power demand of the electricity customer. Note that specific examples of the "first coefficient" will be explained in the Examples.

The control unit 22 only needs to have a control function, and includes an arithmetic processing unit (not illustrated), and a storage unit (not illustrated) that stores a control program. Prescribed control is carried out in the control unit 22 by causing the arithmetic processing unit to read the control program stored in the storage unit and to execute the control program. The arithmetic processing unit is exemplified by a microprocessor, for instance. The storage unit is exemplified by a memory, for instance.

[Operation]

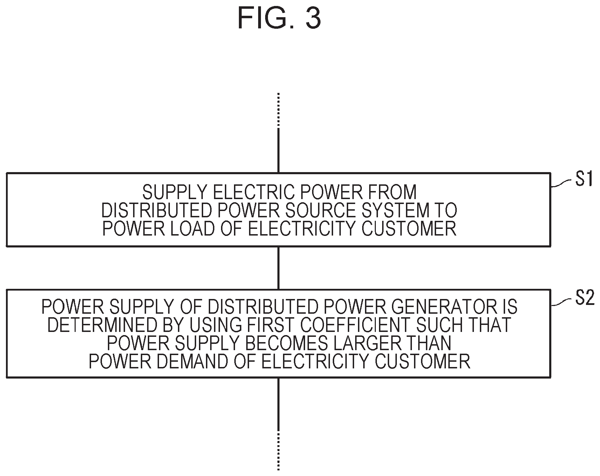

Fig. 3 is a flowchart illustrating an example of an operation (a power controlling method) by the power control apparatus of the first embodiment.

The following operation may be carried out by causing the arithmetic processing unit of the control unit 22 of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2, the power supply is determined by using the first coefficient such that the power supply of the distributed power generator 31 becomes larger than the power demand of the electricity customer.

According to the present embodiment described above, a possibility of implementation of a power purchase from the electric power system can be reduced as compared to the related art.

Specifically, although a possibility of causing a reverse power flow to the electric power system may be increased, the present embodiment allows for this possibility and determines the power supply of the distributed power generator 31 by using the first coefficient such that the power supply of the distributed power generator 31 becomes larger than the power demand of the electricity customer. Accordingly, the present embodiment can appropriately suppress the power purchase from the electric power system by the distributed power source system 10 as compared to a case in which the power supply of the distributed power generator 31 is not determined by using the aforementioned first coefficient.

(EXAMPLE 1)

A power controlling method of the present example is the same as that of the first embodiment except for the configuration of the distributed power generator 31 and the contents of control by the control unit 22 to be described below.

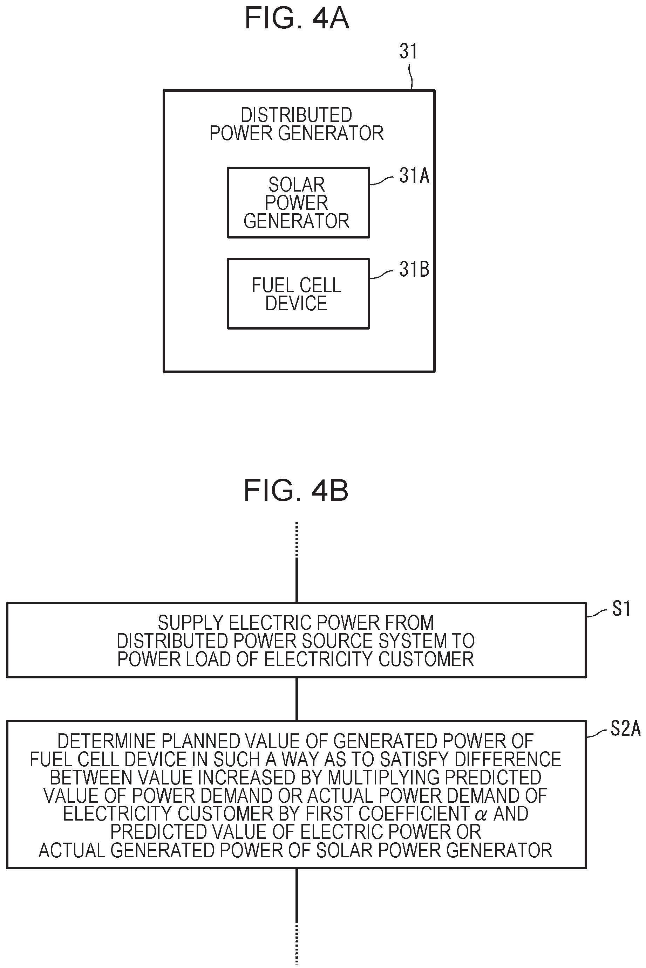

Fig. 4A is a diagram illustrating an example of a distributed power generator provided to a distributed power source system of Example 1 of the first embodiment.

In the example illustrated in Fig. 4A, the distributed power generator 31 includes a solar power generator 31A and a fuel cell device 31B.

By control of the power control apparatus 20, the solar power generator 31A generates power by converting light energy into electric power while using sunlight. The electric power generated by the solar power generator 31A is supplied to the power load 40, the electric power system, or the electric storage device 32. A well-known device can be used as the solar power generator 31A.

By control of the power control apparatus 20, the fuel cell device 31B generates power while using hydrogen supplied from a not-illustrated hydrogen supply source. The electric power generated by the fuel cell device 31B is supplied to the power load 40, the electric power system, or the electric storage device 32. A well-known device can be used as the fuel cell device 31B. A hydrogen storage unit is cited as an example of the hydrogen supply source. However, the hydrogen supply source is not limited thereto.

Here, the distributed power generator 31 may be a system configured to supply large electric power to the electric power system, for example. In this case, the solar power generator 31A and the fuel cell device 31B include a solar cell cluster formed from multiple solar cells including solar panels, and a fuel cell unit cluster formed from multiple fuel cell units including fuel cell stacks, respectively. A detailed configuration of the above-mentioned distributed power generator 31 will be described in the second embodiment.

Fig. 4B is a flowchart illustrating an example of the operation by the power control apparatus (the power controlling method) of the Example 1 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2A, a planned value of generated power of the fuel cell device 31B is determined in such a way as to satisfy a difference between a value increased by multiplying a predicted value of power demand or actual power demand of the electricity customer by a first coefficient $\alpha$ and a predicted value of electric power or actual generated power of the solar power generator 31A. Here, the actual power demand of the electricity customer is an actual value of the power demand of the electricity customer in other words. Meanwhile, the actual generated power of the solar power generator 31A is an actual value of the generated power of the solar power generator 31A in other words.

Here, when the power load 40 of the electricity customer is power consumption equipment in a factory, for example, the "predicted value of the power demand of the electricity customer" can appropriately be determined from factory operation historic data representing operating days or non-operating days of the factory in the past, actual power consumption data of the power load 40 corresponding to the operating days or the non-operating days of the factory, and the like which are stored in the storage unit 21. The "actual power demand of the electricity customer" represents an actual value of the electric power consumed by the power load 40, which may be the newest actual value data of the power consumption by the power load 40 stored in the storage unit 21, or a moving average value of the latest actual value data of the power consumption by the power load 40 sampled in an appropriate sampling period and saved in the storage unit 21.

The "predicted value of the electric power of the solar power generator 31A" can appropriately be determined from past weather data and the like saved in the storage unit 21. The "actual generated power of the solar power generator 31A" may be the newest actual value data of the generated power of the solar power generator 31A stored in the storage unit 21, or a moving average value of the latest actual value data of the generated power of the solar power generator 31A sampled in an appropriate sampling period and saved in the storage unit 21.

Information representing the "planned value of the generated power of the fuel cell device 31B" determined in step S2A may be transmitted to the control unit of the fuel cell device 31B via a communication network. A control device 50B to be described in the second embodiment and the like can be cited as examples of the aforementioned control unit. However, the control unit is not limited thereto.

The "first coefficient $\alpha$" is a coefficient for estimating the predicted value of the power demand or the actual power demand of the electricity customer more than actual data in determining the planned value of the generated power of the fuel cell device 31B, which may be an appropriate numerical value larger than "1" assignable by a user and the like. The user includes a direct or indirect user of the power control apparatus 20. The direct user of the power control apparatus 20 is an administrator of the power control apparatus 20, for example. The indirect user of the power control apparatus 20 is an owner of the distributed power source system 10, for example. This owner may be the aforementioned electricity customer or an electricity producer who supplies the electric power to the electricity customer by using the distributed power source system 10.

Generated power of the fuel cell device 31B (hereinafter referred to as generated power of the present disclosure) calculated from the difference between the value increased by multiplying the predicted value of the power demand or the actual power demand of the electricity customer by the first coefficient $\alpha$ and the predicted value of electric power or the actual generated power of the solar power generator 31A is larger as compared to generated power of the fuel cell device 31B (hereinafter referred to as generated power of a comparative example) calculated from a difference between the predicted value of the power demand or the actual power demand of the electricity customer and the predicted value of the electric power or the actual generated power of the solar power generator 31A.

Here, the "generated power of the comparative example" corresponds to electric power that is unlikely to induce the power purchase from the electric power system. That is to say, the "generated power of the present disclosure" is electric power which is further increased from the electric power that is unlikely to induce the power purchase from the electric power system by using the first coefficient $\alpha$.

For this reason, by determining the planned value of the generated power of the fuel cell device 31B in such a way as to satisfy the difference between the value increased by multiplying the predicted value of the power demand or the actual power demand of the electricity customer by the first coefficient $\alpha$ and the predicted value of the electric power or the actual generated power of the solar power generator 31A, the present example can appropriately suppress the power purchase from the electric power system by the distributed power source system 10 as compared to a case where the planned value of the generated power of the fuel cell device 31B is determined without increasing the predicted value of the power demand or the actual power demand of the electricity customer.

The power controlling method, the power control apparatus 20, and the distributed power source system 10 of the present example may be the same as those of the first embodiment except for the above-described features.

(EXAMPLE 2)

A power controlling method of the present example is the same as the first embodiment except for the configuration of the distributed power generator 31 and the contents of control by the control unit 22 to be described below.

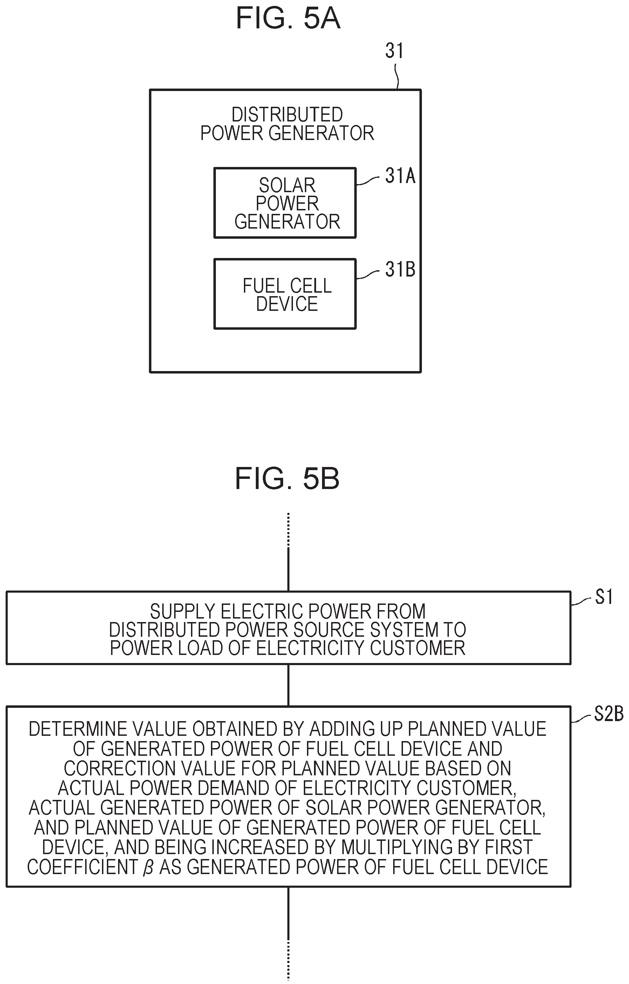

Fig. 5A is a diagram illustrating an example of a distributed power generator provided to a distributed power source system of Example 2 of the first embodiment.

In the example illustrated in Fig. 5A, the distributed power generator 31 includes the solar power generator 31A and the fuel cell device 31B. However, the configurations of the solar power generator 31A and the fuel cell device 31B are the same as those of the Example 1 and explanations will therefore be omitted.

Fig. 5B is a flowchart illustrating an example of the operation by the power control apparatus (the power controlling method) of the Example 2 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2B, a value obtained by adding up a planned value of the generated power of the fuel cell device 31B and a correction value for the planned value based on the actual power demand of the electricity customer, the actual generated power of the solar power generator 31A, and the planned value of the generated power of the fuel cell device 31B, and being increased by multiplying by a first coefficient $\beta$ is determined as the generated power of the fuel cell device 31B.

Here, the "first coefficient $\beta$" is a coefficient for estimating the "value obtained by adding up the planned value of the generated power of the fuel cell device 31B and the correction value for the planned value based on the actual power demand of the electricity customer, the actual generated power of the solar power generator 31A, and the planned value of the generated power of the fuel cell device 31B" more than actual data in determining the generated power of the fuel cell device 31B, which may be an appropriate numerical value larger than "1" assignable by a user and the like. The "user" is the same as the above description and detailed explanations thereof will be omitted. Information representing the "generated power of the fuel cell device 31B" determined in step S2B may be transmitted to the control unit of the fuel cell device 31B via the communication network as with the above description.

For example, a difference between the actual power demand of the electricity customer and a sum of the actual generated power of the solar power generator 31A and the planned value of the generated power of the fuel cell device 31B , or a correction value $FC_{sub}$ to be described in the second embodiment, and the like can be cited as the "correction value for the planned value based on the actual power demand of the electricity customer, the actual generated power of the solar power generator 31A, and the planned value of the generated power of the fuel cell device 31B". However, the correction value is not limited thereto.

Note that the "actual power demand of the electricity customer" and the "actual generated power of the solar power generator 31A" in step S2B are the same as the above description and detailed explanations thereof will be omitted.

In the case where the distributed power generator 31 includes the solar power generator 31A and the fuel cell device 31B, the value obtained by adding up the planned value of the generated power of the fuel cell device 31B and the correction value for the planned value corresponds to the generated power of the fuel cell device 31B that is unlikely to induce the power purchase from the electric power system. That is to say, the value increased by multiplying the total electric power of the planned value and the correction value for the planned value by the first coefficient $\beta$ is the electric power which is further increased from the electric power that is unlikely to induce the power purchase from the electric power system by using the first coefficient $\beta$.

For this reason, by determining the value obtained by adding up the planned value of the generated power of the fuel cell device 31B and the correction value for the planned value and then increasing this value by multiplying by the first coefficient $\beta$ as the generated power of the fuel cell device 31B, the present example can appropriately suppress the power purchase from the electric power system by the distributed power source system 10 as compared to a case where the generated power of the fuel cell device 31B is determined without multiplying by the first coefficient $\beta$.

The power controlling method, the power control apparatus 20, and the distributed power source system 10 of the present example may be the same as those of the first embodiment or the Example 1 of the first embodiment except for the above-described features.

(EXAMPLE 3)

A power controlling method of the present example is the same as the first embodiment except for the configuration of the distributed power generator 31 and the contents of control by the control unit 22 to be described below.

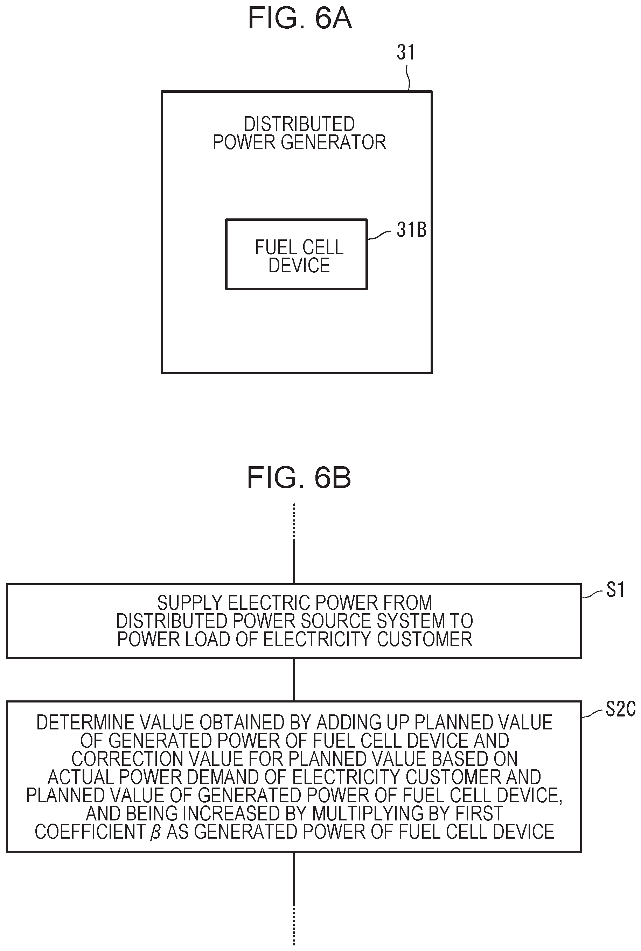

Fig. 6A is a diagram illustrating an example of a distributed power generator provided to a distributed power source system of Example 3 of the first embodiment.

In the example illustrated in Fig. 6A, the distributed power generator 31 includes the fuel cell device 31B. However, the configuration of the fuel cell device 31B is the same as that of the Example 1 and explanations will therefore be omitted.

Fig. 6B is a flowchart illustrating an example of the operation by the power control apparatus (the power controlling method) of the Example 3 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2C, a value obtained by adding up a planned value of the generated power of the fuel cell device 31B and a correction value for the planned value based on the actual power demand of the electricity customer and the planned value of the generated power of the fuel cell device 31B, and being increased by multiplying by the first coefficient β is determined as the generated power of the fuel cell device 31B.

Here, the "first coefficient β" is a coefficient for estimating the "value obtained by adding up the planned value of the generated power of the fuel cell device 31B and the correction value for the planned value based on the actual power demand of the electricity customer and the planned value of the generated power of the fuel cell device 31B" more than actual data in determining the generated power of the fuel cell device 31B, which may be an appropriate numerical value larger than "1" assignable by a user and the like. The "user" is the same as the above description and detailed explanations thereof will be omitted. Information representing the "generated power of the fuel cell device 31B" determined in step S2C may be transmitted to the control unit of the fuel cell device 31B via the communication network as with the above description.

For example, a difference between the actual power demand of the electricity customer and the planned value of the generated power of the fuel cell device 31B , or the correction value $FC_{sub}$ to be described in the second embodiment, and the like can be cited as the "correction value for the planned value based on the actual power demand of the electricity customer and the planned value of the generated power of the fuel cell device 31B". However, the correction value is not limited thereto.

Note that the "actual power demand of the electricity customer" in step S2C is the same as the above description and detailed explanations thereof will be omitted.

In the case where the distributed power generator 31 includes the fuel cell device 31B, the value obtained by adding up the planned value of the generated power of the fuel cell device 31B and the correction value for the planned value corresponds to the generated power of the fuel cell device 31B that is unlikely to induce the power purchase from the electric power system. That is to say, the value increased by multiplying the total electric power of the planned value and the correction value for the planned value by the first coefficient β is the electric power which is further increased from the generated power that is unlikely to induce the power purchase from the electric power system by using the first coefficient β.

For this reason, by determining the value obtained by adding up the planned value of the generated power of the fuel cell device 31B and the correction value for the planned value and then increasing this value by multiplying by the first coefficient β as the generated power of the fuel cell device 31B, the present example can appropriately suppress the power purchase from the electric power system by the distributed power source system 10 as compared to a case where the generated power of the fuel cell device 31B is determined without multiplying by the first coefficient β.

The power controlling method, the power control apparatus 20, and the distributed power source system 10 of the present example may be the same as those of the first embodiment and any of the Examples 1 and 2 of the first embodiment except for the above-described features.

(EXAMPLE 4)

A power controlling method of the present example is the same as the first embodiment except for the configuration of the distributed power generator 31 and the contents of control by the control unit 22 to be described below.

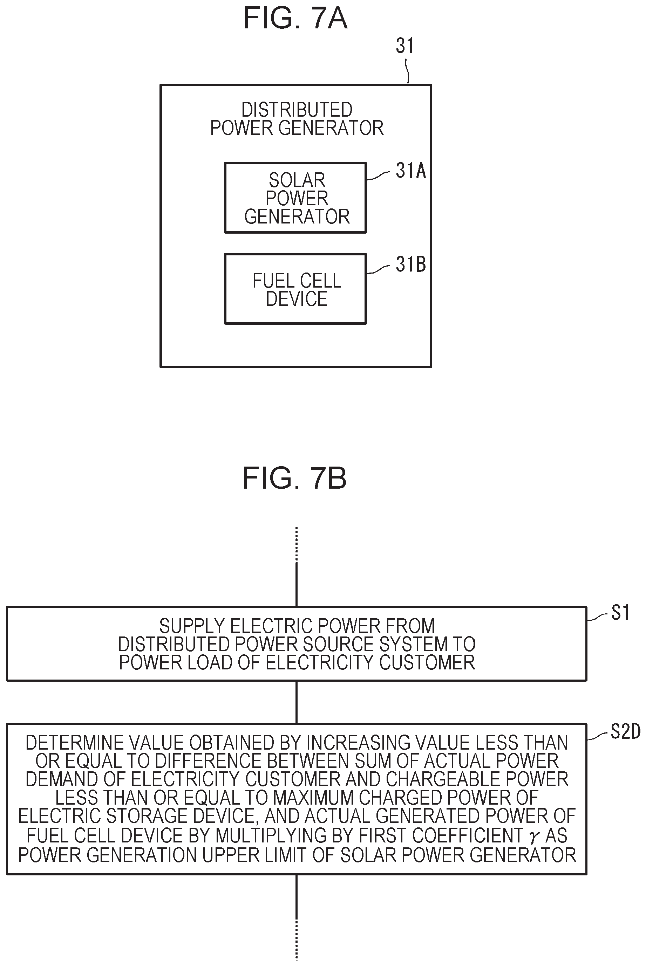

Fig. 7A is a diagram illustrating an example of a distributed power generator provided to a distributed power source system of Example 4 of the first embodiment.

In the example illustrated in Fig. 7A, the distributed power generator 31 includes the solar power generator 31A and the fuel cell device 31B. However, the configurations of the solar power generator 31A and the fuel cell device 31B are the same as those of the Example 1 and explanations will therefore be omitted.

Fig. 7B is a flowchart illustrating an example of the operation by the power control apparatus (the power controlling method) of the Example 4 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2D, a value obtained by increasing a value less than or equal to a difference between a sum of the actual power demand of the electricity customer and the chargeable power less than or equal to maximum charged power of the electric storage device 32, and the actual generated power of the fuel cell device 31B by multiplying by the first coefficient γ is determined as a power generation upper limit of the solar power generator 31A.

Here, the "first coefficient γ" is a coefficient for estimating the "value less than or equal to the difference between the sum of the actual power demand of the electricity customer and the chargeable power less than or equal to the maximum charged power of the electric storage device 32, and the actual generated power of the fuel cell device 31B" more than actual data in determining the power generation upper limit of the solar power generator 31A, which may be an appropriate numerical value larger than "1" assignable by a user and the like. The "user" is the same as the above description and detailed explanations thereof will be omitted. Information representing the "power generation upper limit of the solar power generator 31A" determined in step S2D may be transmitted to the control unit of the solar power generator 31A via the communication network. A control device 50A to be described in the second embodiment or the like can be cited as the above-described control unit, for example. However, the control unit is not limited thereto.

The "maximum charged power of the electric storage device 32" is a charging capability (kW) of the electric storage device 32 which is determined depending on specifications, a usage status, and the like of the electric storage device 32. The "maximum charged power of the electric storage device 32" may be transmitted from the electric storage device 32 to the power control apparatus 20 at an appropriate time. The "chargeable power of the electric storage device 32" may be the above-mentioned maximum charged power or a value less than the above-mentioned maximum charged power assignable by the user and the like.

Note that the "actual power demand of the electricity customer" in step S2D is the same as the above description and detailed explanations thereof will be omitted. Meanwhile, the "actual generated power of the fuel cell device 31B" may be the newest actual value data of the generated power of the fuel cell device 31B stored in the storage unit 21, or a moving average value of the latest actual value data of the generated power of the fuel cell device 31B sampled in an appropriate sampling period and saved in the storage unit 21.

In the case where the distributed power generator 31 includes the solar power generator 31A and the fuel cell device 31B, the value less than or equal to the difference between the sum of the actual power demand of the electricity customer and the chargeable power less than or equal to the maximum charged power of the electric storage device 32, and the actual generated power of the fuel cell device 31B corresponds to the generated power of the solar power generator 31A which is unlikely to induce the power purchase from the electric power system. That is to say, the value obtained by increasing the above-mentioned value less than or equal to the difference by multiplying by the first coefficient γ is electric power which is further increased from the generated power that is unlikely to induce the power purchase from the electric power system by using the first coefficient β.

For this reason, by determining the value obtained by increasing the value less than or equal to the difference between the sum of the actual power demand of the electricity customer and the chargeable power less than or equal to the maximum charged power of the electric storage device 32, and the actual generated power of the fuel cell device 31B by multiplying by the first coefficient γ as the power generation upper limit of the solar power generator 31A, the present example can appropriately suppress the power purchase from the electric power system by the distributed power source system 10 as compared to a case where the power generation upper limit of the solar power generator 31A is determined without increasing the value less than or equal to the difference.

The power controlling method, the power control apparatus 20, and the distributed power source system 10 of the present example may be the same as those of the first embodiment and any of the Examples 1 to 3 of the first embodiment except for the above-described features.

(EXAMPLE 5)

A power controlling method of the present example is the same as the first embodiment except for the configuration of the distributed power generator 31 and the contents of control by the control unit 22 to be described below.

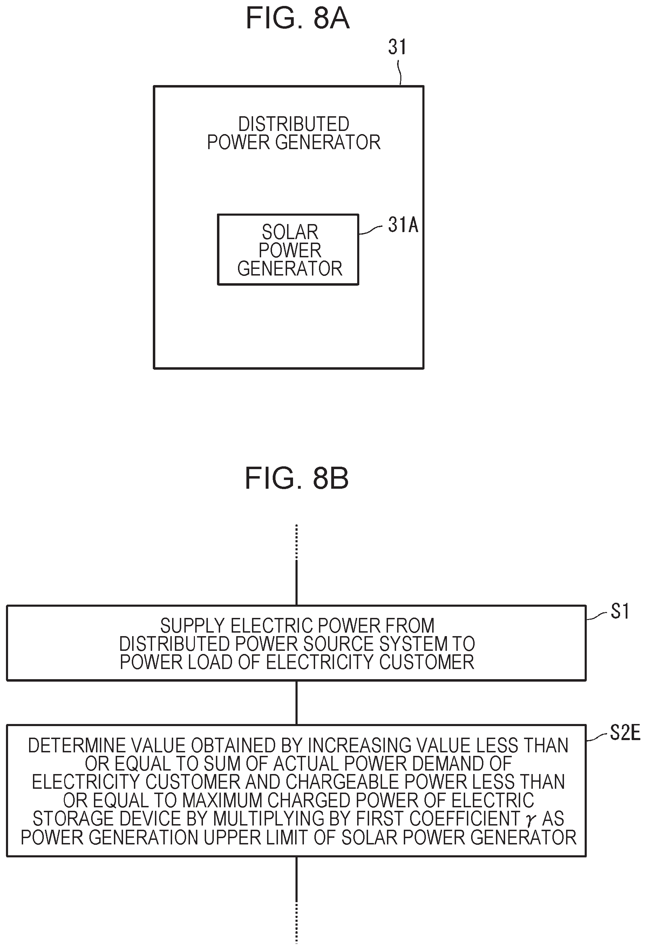

Fig. 8A is a diagram illustrating an example of a distributed power generator provided to a distributed power source system of Example 5 of the first embodiment.

In the example illustrated in Fig. 8A, the distributed power generator 31 includes the solar power generator 31A. However, the configuration of the solar power generator 31A is the same as that of the Example 1 and explanations will therefore be omitted.

Fig. 8B is a flowchart illustrating an example of the operation by the power control apparatus (the power controlling method) of the Example 5 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2E, a value obtained by increasing a value less than or equal to a sum of the actual power demand of the electricity customer and the chargeable power less than or equal to the maximum charged power of the electric storage device 32 by multiplying by the first coefficient $\gamma$ is determined as the power generation upper limit of the solar power generator 31A.

Here, the "first coefficient $\gamma$" is a coefficient for estimating the "value less than or equal to the sum of the actual power demand of the electricity customer and the chargeable power less than or equal to the maximum charged power of the electric storage device 32" more than actual data in determining the power generation upper limit of the solar power generator 31A, which may be an appropriate numerical value larger than "1" assignable by a user and the like. The "user" is the same as the above description and detailed explanations thereof will be omitted. Information representing the "power generation upper limit of the solar power generator 31A" determined in step S2E may be transmitted to the control unit of the solar power generator 31A via the communication network as with the above description.

Note that the "actual power demand of the electricity customer" and the "maximum charged power of the electric storage device 32" in step S2E are the same as the above description and detailed explanations thereof will be omitted.

In the case where the distributed power generator 31 includes the solar power generator 31A, the value less than or equal to the sum of the actual power demand of the electricity customer and the chargeable power less than or equal to the maximum charged power of the electric storage device 32 corresponds to the generated power of the solar power generator 31A which is unlikely to induce the power purchase from the electric power system. That is to say, the value obtained by increasing the above-mentioned value less than or equal to the sum by multiplying by the first coefficient $\gamma$ is electric power which is further increased from the generated power that is unlikely to induce the power purchase from the electric power system by using the first coefficient $\gamma$.

For this reason, by determining the value obtained by increasing the value less than or equal to the sum of the actual power demand of the electricity customer and the chargeable power less than or equal to the maximum charged power of the electric storage device 32 by multiplying by the first coefficient $\gamma$ as the power generation upper limit of the solar power generator 31A, the present example can appropriately suppress the power purchase from the electric power system by the distributed power source system 10 as compared to a case where the power generation upper limit of the solar power generator 31A is determined without increasing the value less than or equal to the sum.

The power controlling method, the power control apparatus 20, and the distributed power source system 10 of the present example may be the same as those of the first embodiment and any of the Examples 1 to 4 of the first embodiment except for the above-described features.

(EXAMPLE 6)

A power controlling method of the present example is the same as the first embodiment except for the configuration of the distributed power generator 31 and the contents of control by the control unit 22 to be described below.

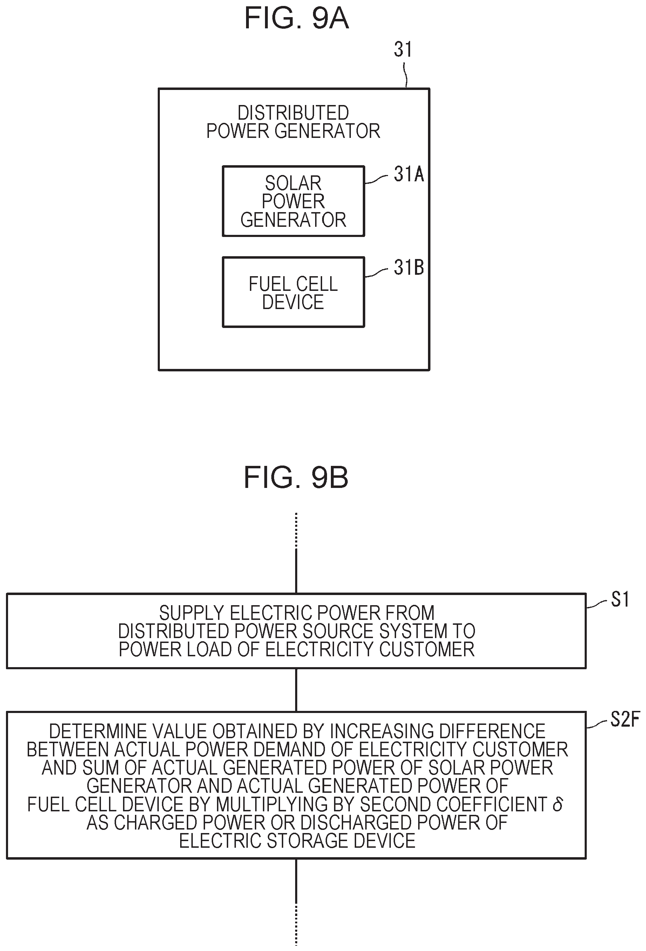

Fig. 9A is a diagram illustrating an example of a distributed power generator provided to a distributed power source system of Example 6 of the first embodiment.

In the example illustrated in Fig. 9A, the distributed power generator 31 includes the solar power generator 31A and the fuel cell device 31B. However, the configurations of the solar power generator 31A and the fuel cell device 31B are the same as those of the Example 1 and explanations will therefore be omitted.

Fig. 9B is a flowchart illustrating an example of the operation by the power control apparatus (the power controlling method) of the Example 6 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2F, a value obtained by increasing a difference between the actual power demand of the electricity customer and a sum of the actual generated power of the solar power generator 31A and the actual generated power of the fuel cell device 31B by multiplying by a second coefficient $\delta$ is determined as any of charged power and discharged power of the electric storage device 32.

Here, the "second coefficient $\delta$" is a coefficient for estimating the "difference between the actual power demand of the electricity customer and the sum of the actual generated power of the solar power generator 31A and the actual generated power of the fuel cell device 31B" more than actual data in determining the charged power or the discharged power of the electric storage device 32, which may be an appropriate numerical value larger than "1" assignable by a user and the like. The "user" is the same as the above description and detailed explanations thereof will be omitted. Information representing "the charged power or the discharged power of the electric storage device 32" determined in step S2F may be transmitted to the control unit of the electric storage device 32 via the communication network. A control device 50C to be described in the second embodiment or the like can be cited as the above-described control unit, for example. However, the control unit is not limited thereto.

Note that the "actual power demand of the electricity customer" and the "actual generated power of the solar power generator 31A" as well as the "actual generated power of the fuel cell device 31B" in step S2F are the same as the above description and detailed explanations thereof will be omitted.

In the case where the distributed power generator 31 includes the solar power generator 31A and the fuel cell device 31B, the difference between the actual power demand of the electricity customer and the sum of the actual generated power of the solar power generator 31A and the actual generated power of the fuel cell device 31B corresponds to the charged power or the discharged power of the electric storage device 32 which is unlikely to induce the power purchase from the electric power system. That is to say, the value obtained by increasing the above-mentioned difference by multiplying by the second coefficient $\delta$ is electric power which is further increased from the electric power that is unlikely to induce the power purchase from the electric power system by using the second coefficient $\delta$.

For this reason, by determining the value obtained by increasing the difference between the actual power demand of the electricity customer and the sum of the actual generated power of the solar power generator 31A and the actual generated power of the fuel cell device 31B by multiplying by the second coefficient $\delta$ as the charged power or the discharged power of the electric storage device 32, the present example can appropriately suppress the power purchase from the electric power system by the distributed power source system 10 as compared to a case where the charged power or the discharged power of the electric storage device 32 is determined without increasing the difference.

The power controlling method, the power control apparatus 20, and the distributed power source system 10 of the present example may be the same as those of the first embodiment and any of the Examples 1 to 5 of the first embodiment except for the above-described features.

(EXAMPLE 7)

A power controlling method of the present example is the same as the first embodiment except for the configuration of the distributed power generator 31 and the contents of control by the control unit 22 to be described below.

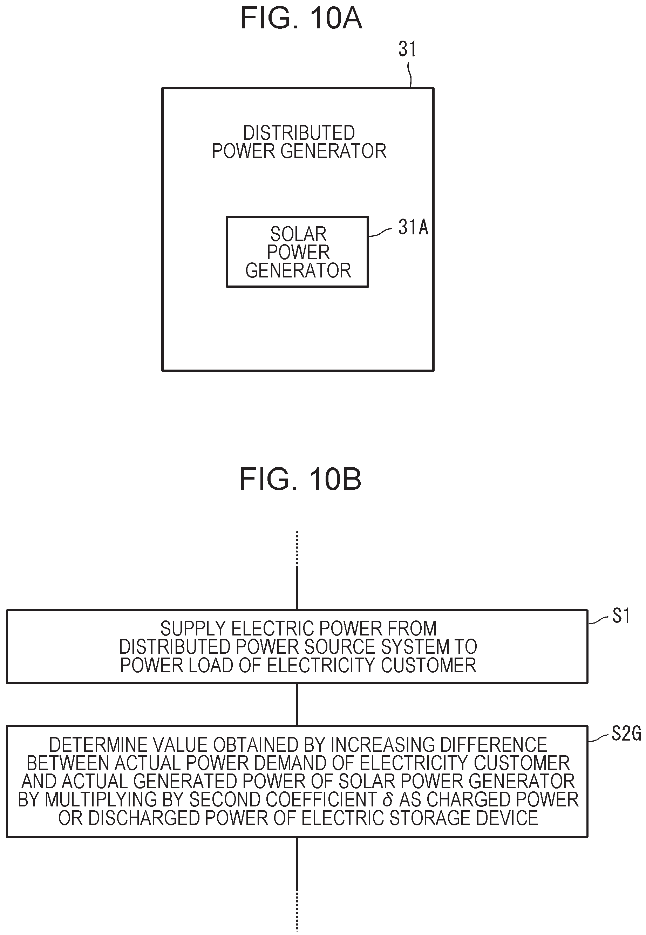

Fig. 10A is a diagram illustrating an example of a distributed power generator provided to a distributed power source system of Example 7 of the first embodiment.

In the example illustrated in Fig. 10A, the distributed power generator 31 includes the solar power generator 31A. However, the configuration of the solar power generator 31A is the same as that of the Example 1 and explanations will therefore be omitted.

Fig. 10B is a flowchart illustrating an example of the operation by the power control apparatus (the power controlling method) of the Example 7 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2G, a value obtained by increasing a difference between the actual power demand of the electricity customer and the actual generated power of the solar power generator 31A by multiplying by the second coefficient $\delta$ is determined as any of the charged power and the discharged power of the electric storage device 32.

Here, the "second coefficient $\delta$" is a coefficient for estimating the "difference between the actual power demand of the electricity customer and the actual generated power of the solar power generator 31A" more than actual data in determining the charged power or the discharged power of the electric storage device 32, which may be an appropriate numerical value larger than "1" assignable by a user and the like. The "user" is the same as the above description and detailed explanations thereof will be omitted. Information representing "the charged power or the discharged power of the electric storage device 32" determined in step S2G may be transmitted to the control unit of the electric storage device 32 via the communication network as with the above description.

Note that the "actual power demand of the electricity customer" and the "actual generated power of the solar power generator 31A" in step S2G are the same as the above description and detailed explanations thereof will be omitted.

In the case where the distributed power generator 31 includes the solar power generator 31A, the difference between the actual power demand of the electricity customer and the actual generated power of the solar power generator 31A corresponds to the charged power or the discharged power of the electric storage device 32 which is unlikely to induce the power purchase from the electric power system. That is to say, the value obtained by increasing the above-mentioned difference by multiplying by the second coefficient $\delta$ is electric power which is further increased from the electric power that is unlikely to induce the power purchase from the electric power system by using the second coefficient $\delta$.

For this reason, by determining the value obtained by increasing the difference between the actual power demand of the electricity customer and the actual generated power of the solar power generator 31A by multiplying by the second coefficient $\delta$ as the charged power or the discharged power of the electric storage device 32, the present example can appropriately suppress the power purchase from the electric power system by the distributed power source system 10 as compared to a case where the charged power or the discharged power of the electric storage device 32 is determined without increasing the difference.

The power controlling method, the power control apparatus 20, and the distributed power source system 10 of the present example may be the same as those of the first embodiment and any of the Examples 1 to 6 of the first embodiment except for the above-described features.

(EXAMPLE 8)

A power controlling method of the present example is the same as the first embodiment except for the configuration of the distributed power generator 31 and the contents of control by the control unit 22 to be described below.

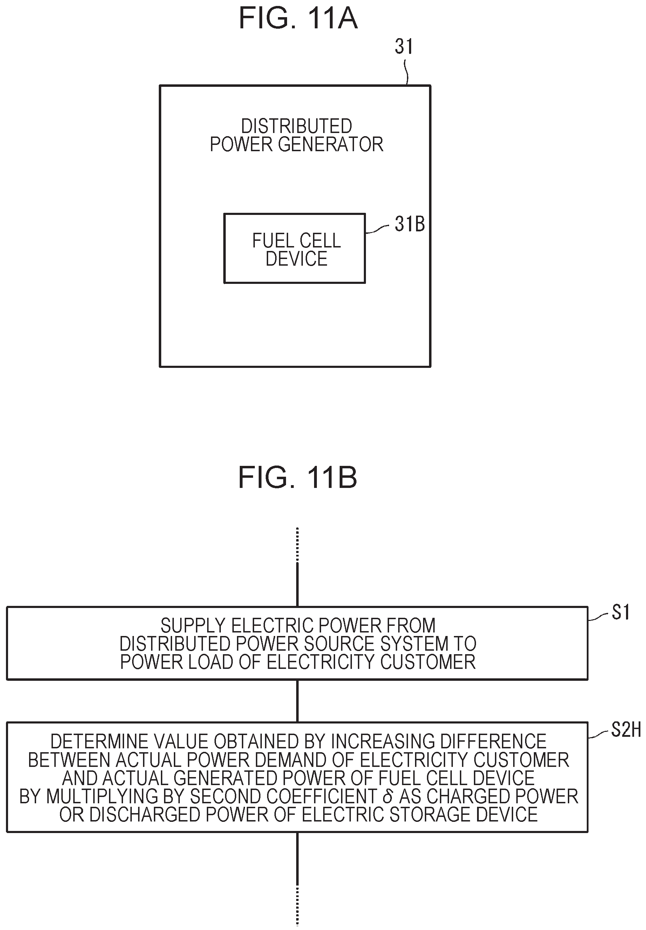

Fig. 11A is a diagram illustrating an example of a distributed power generator provided to a distributed power source system of Example 8 of the first embodiment.

In the example illustrated in Fig. 11A, the distributed power generator 31 includes the fuel cell device 31B. However, the configuration of the fuel cell device 31B is the same as that of the Example 1 and explanations will therefore be omitted.

Fig. 11B is a flowchart illustrating an example of the operation by the power control apparatus (the power controlling method) of the Example 8 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2H, a value obtained by increasing a difference between the actual power demand of the electricity customer and the actual generated power of the fuel cell device 31B by multiplying by the second coefficient $\delta$ is determined as any of the charged power and the discharged power of the electric storage device 32.

Here, the "second coefficient $\delta$" is a coefficient for estimating the "difference between the actual power demand of the electricity customer and the actual generated power of the fuel cell device 31B" more than actual data in determining the charged power or the discharged power of the electric storage device 32, which may be an appropriate numerical value larger than "1" assignable by a user and the like. The "user" is the same as the above description and detailed explanations thereof will be omitted. Information representing "the charged power or the discharged power of the electric storage device 32" determined in step S2H may be transmitted to the control unit of the electric storage device 32 via the communication network as with the above description.

Note that the "actual power demand of the electricity customer" and the "actual generated power of the fuel cell device 31B" in step S2H are the same as the above description and detailed explanations thereof will be omitted.

In the case where the distributed power generator 31 includes the fuel cell device 31B, the difference between the actual power demand of the electricity customer and the actual generated power of the fuel cell device 31B corresponds to the charged power or the discharged power of the electric storage device 32 which is unlikely to induce the power purchase from the electric power system. That is to say, the value obtained by increasing the above-mentioned difference by multiplying by the second coefficient $\delta$ is electric power which is further increased from the electric power that is unlikely to induce the power purchase from the electric power system by using the second coefficient $\delta$.

For this reason, by determining the value obtained by increasing the difference between the actual power demand of the electricity customer and the actual generated power of the fuel cell device 31B by multiplying by the second coefficient $\delta$ as the charged power or the discharged power of the electric storage device 32, the present example can appropriately suppress the power purchase from the electric power system by the distributed power source system 10 as compared to a case where the charged power or the discharged power of the electric storage device 32 is determined without increasing the difference.

The power controlling method, the power control apparatus 20, and the distributed power source system 10 of the present example may be the same as those of the first embodiment and any of the Examples 1 to 7 of the first embodiment except for the above-described features.

(EXAMPLE 9)

A power controlling method of the present example is the same as the first embodiment except that the first coefficient varies with seasons. The "first coefficient" can easily be understood from the above description and detailed explanations will therefore be omitted.

As an example, the "first coefficient $\alpha$", the "first coefficient $\beta$", and the "first coefficient $\gamma$" may be set to vary with the seasons as shown in the following Table 1. It is to be noted, however, that these numerical values are merely exemplary and are not limited to this example.

[Table 1]

|  | Spring | Summer | Fall | Winter |
|---|---|---|---|---|
| $\alpha$ | 1.3 | 1.2 | 1.3 | 1.1 |
| $\beta$ | 1.0 | 1.1 | 1.0 | 1.2 |
| $\gamma$ | 1.0 | 1.1 | 1.0 | 1.2 |
| $\delta$ | 1.1 | 1.0 | 1.1 | 1.0 |

In general, the generated power of the solar power generator 31A and the power demand of the electricity customer vary with the seasons. For this reason, in the present example, by setting the first coefficient to a desired value depending on the seasons, it is possible to decrease the amount of power of the power purchase from the electric power system as compared to a case in which the first coefficient is constant in every season.

The power controlling method, the power control apparatus 20, and the distributed power source system 10 of the present example may be the same as those of the first embodiment and any of the Examples 1 to 8 of the first embodiment except for the above-described features.

(EXAMPLE 10)

A power controlling method of the present example is the same as any of the Examples 6 to 8 of the first embodiment except that the second coefficient varies with the seasons. The "second coefficient" can easily be understood from the above description and detailed explanations will therefore be omitted.

As an example, the "second coefficient $\delta$" may be set to vary with the seasons as shown in the foregoing Table 1. It is to be noted, however, that these numerical values are merely exemplary and are not limited to this example.

In general, the generated power of the solar power generator 31A and the power demand of the electricity customer vary with the seasons. For this reason, in the present example, by setting the second coefficient to a desired value depending on the seasons, it is possible to decrease the amount of power of the power purchase from the electric power system as compared to a case in which the second coefficient is constant in every season.

The power controlling method, the power control apparatus 20, and the distributed power source system 10 of the present example may be the same as those of the first embodiment and any of the Examples 1 to 9 of the first embodiment except for the above-described features.

(EXAMPLE 11)

A power controlling method of the present example is the same as the first embodiment except for the configuration of the distributed power generator 31 and the contents of control by the control unit 22 to be described below.

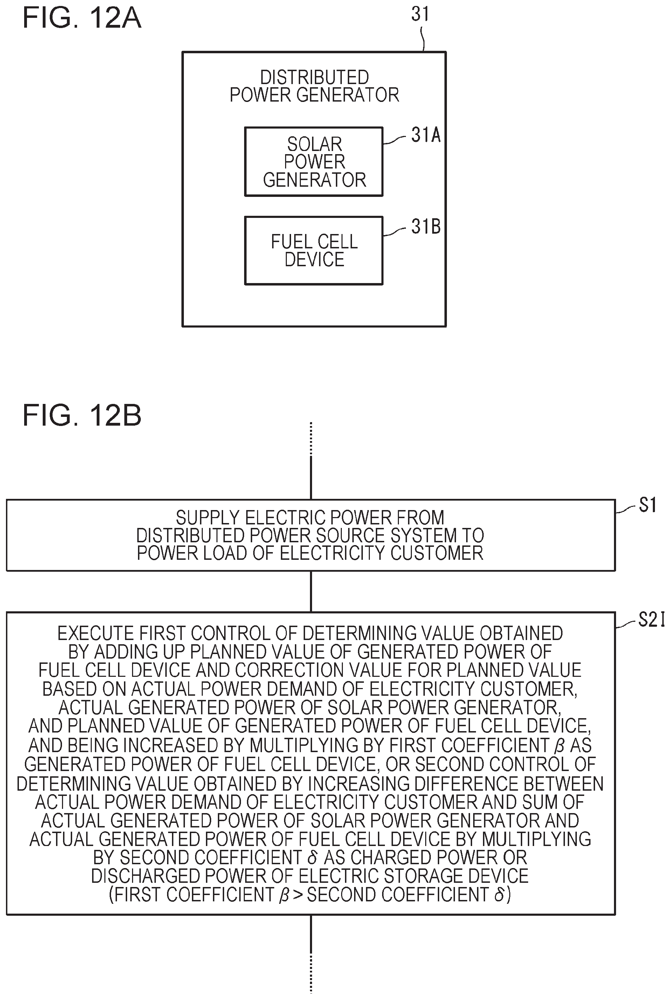

Fig. 12A is a diagram illustrating an example of a distributed power generator provided to a distributed power source system of Example 11 of the first embodiment.

In the example illustrated in Fig. 12A, the distributed power generator 31 includes the solar power generator 31A and the fuel cell device 31B. However, the configurations of the solar power generator 31A and the fuel cell device 31B are the same as those of the Example 1 and explanations will therefore be omitted.

Fig. 12B is a flowchart illustrating an example of the operation by the power control apparatus (the power controlling method) of the Example 11 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S21, first control of determining the value obtained by adding up the planned value of the generated power of the fuel cell device 31B and the correction value for the planned value based on the actual power demand of the electricity customer, the actual generated power of the solar power generator 31A, and the planned value of the generated power of the fuel cell device 31B, and being increased by multiplying by the first coefficient β as the generated power of the fuel cell device 31B, or second control of determining the value obtained by increasing the difference between the actual power demand of the electricity customer and the sum of the actual generated power of the solar power generator 31A and the actual generated power of the fuel cell device 31B by multiplying by the second coefficient δ as the charged power or the discharged power of the electric storage device 32 is executed. Here, the first coefficient β is larger than the second coefficient δ.

The "first control" in step S2I can easily be understood from the description of the Example 2 and detailed explanations will therefore be omitted. The "second control" in step S2I can easily be understood from the description of the Example 6 and detailed explanations will therefore be omitted.

By executing the first control of determining the value obtained by adding up the planned value of the generated power of the fuel cell device 31B and the correction value for the planned value and being increased by multiplying by the first coefficient β as the generated power of the fuel cell device 31B as described above, the present example can appropriately suppress the power purchase from the electric power system by the distributed power source system 10 as compared to a case where the control of determining the generated power of the fuel cell device 31B is executed without multiplying by the first coefficient β.

Meanwhile, by executing the second control of determining the value obtained by increasing the difference between the actual power demand of the electricity customer and the sum of the actual generated power of the solar power generator 31A and the actual generated power of the fuel cell device 31B by multiplying by the second coefficient δ as the charged power or the discharged power of the electric storage device 32 as described above, the present example can appropriately suppress the power purchase from the electric power system by the distributed power source system 10 as compared to a case where the control of determining the charged power or the discharged power of the electric storage device 32 is executed without increasing the difference.

Here, assuming that the magnitudes of the first coefficient and the second coefficient are equal, it is highly likely that the operation and effect of the former first control for suppressing the power purchase from the electric power system is larger than the operation and effect of the latter second control. This is because the major portion of the power demand of the electricity customer is generally covered by the power supply from the distributed power generator 31 while the remaining portion is covered by the charged power or the discharged power of the electric storage device 32, and the generated power of the fuel cell device 31B therefore tends to be larger than the charged power or the discharged power of the electric storage device 32 as a consequence.

Accordingly, by setting the first coefficient β in the first control larger than the second coefficient δ in the second control as in the present example, it is possible to appropriately suppress the power purchase from the electric power system by the distributed power source system 10 as compared to a case in which the magnitudes of the two values are equal or the magnitude relation between the two values is reversed.

The power controlling method, the power control apparatus 20, and the distributed power source system 10 of the present example may be the same as those of the first embodiment and any of the Examples 1 to 10 of the first embodiment except for the above-described features.

(EXAMPLE 12)

A power controlling method of the present example is the same as the first embodiment except for the configuration of the distributed power generator 31 and the contents of control by the control unit 22 to be described below.

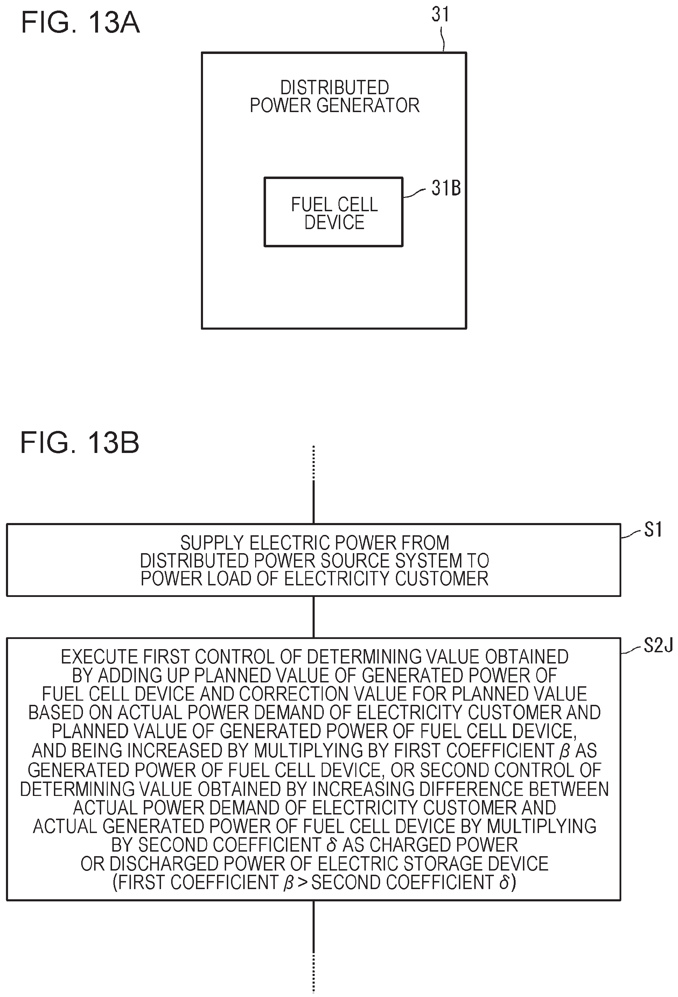

Fig. 13A is a diagram illustrating an example of a distributed power generator provided to a distributed power source system of Example 12 of the first embodiment.

In the example illustrated in Fig. 13A, the distributed power generator 31 includes the fuel cell device 31B. However, the configuration of the fuel cell device 31B is the same as that of the Example 1 and explanations will therefore be omitted.

Fig. 13B is a flowchart illustrating an example of the operation by the power control apparatus (the power controlling method) of the Example 12 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2J, first control of determining the value obtained by adding up the planned value of the generated power of the fuel cell device 31B and the correction value for the planned value based on the actual power demand of the electricity customer and the planned value of the generated power of the fuel cell device 31B, and being increased by multiplying by the first coefficient β as the generated power of the fuel cell device 31B, or second control of determining the value obtained by increasing the difference between the actual power demand of the electricity customer and the actual generated power of the fuel cell device 31B by multiplying by the second coefficient δ as the charged power or the discharged power of the electric storage device 32 is executed. Here, the first coefficient β is larger than the second coefficient δ.

The "first control" in step S2J can easily be understood from the description of the Example 3 and detailed explanations will therefore be omitted. The "second control" in step S2J can easily be understood from the description of the Example 8 and detailed explanations will therefore be omitted.

By executing the first control of determining the value obtained by adding up the planned value of the generated power of the fuel cell device 31B and the correction value for the planned value and being increased by multiplying by the first coefficient β as the generated power of the fuel cell device 31B as described above, the present example can appropriately suppress the power purchase from the electric power system by the distributed power source system 10 as compared to a case where the control of determining the generated power of the fuel cell device 31B is executed without multiplying by the first coefficient β.

Meanwhile, by executing the second control of determining the value obtained by increasing the difference between the actual power demand of the electricity customer and the actual generated power of the fuel cell device 31B by multiplying by the second coefficient δ as the charged power or the discharged power of the electric storage device 32 as described above, the present example can appropriately suppress the power purchase from the electric power system by the distributed power source system 10 as compared to a case where the control of determining the charged power or the discharged power of the electric storage device is executed without increasing the difference.

Here, assuming that the magnitudes of the first coefficient and the second coefficient are equal, it is highly likely that the operation and effect of the former first control for suppressing the power purchase from the electric power system is larger than the operation and effect of the latter second control. This is because the major portion of the power demand of the electricity customer is generally covered by the power supply from the distributed power generator 31 while the remaining portion is covered by the charged power or the discharged power of the electric storage device 32, and the generated power of the fuel cell device 31B therefore tends to be larger than the charged power or the discharged power of the electric storage device 32 as a consequence.

Accordingly, by setting the first coefficient β in the first control larger than the second coefficient δ in the second control as in the present example, it is possible to appropriately suppress the power purchase from the electric power system by the distributed power source system 10 as compared to a case in which the magnitudes of the two values are equal or the magnitude relation between the two values is reversed.

The power controlling method, the power control apparatus 20, and the distributed power source system 10 of the present example may be the same as those of the first embodiment and any of the Examples 1 to 11 of the first embodiment except for the above-described features.

(EXAMPLE 13)

A power controlling method of the present example is the same as the first embodiment except for the configuration of the distributed power generator 31 and the contents of control by the control unit 22 to be described below.

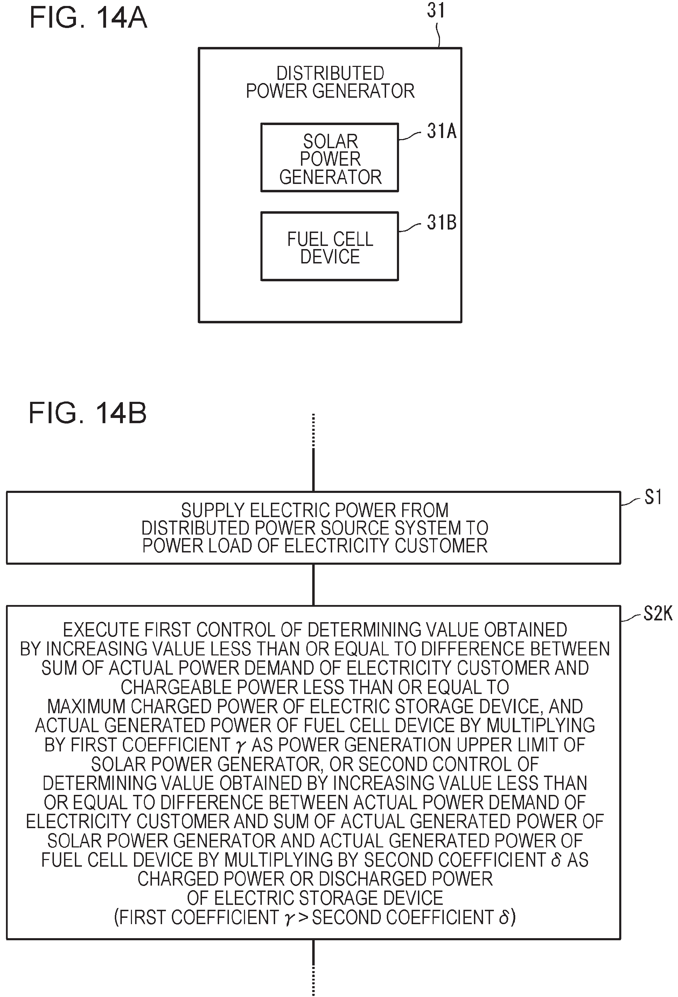

Fig. 14A is a diagram illustrating an example of a distributed power generator provided to a distributed power source system of Example 13 of the first embodiment.

In the example illustrated in Fig. 14A, the distributed power generator 31 includes the solar power generator 31A and the fuel cell device 31B. However, the configurations of the solar power generator 31A and the fuel cell device 31B are the same as those of the Example 1 and explanations will therefore be omitted.

Fig. 14B is a flowchart illustrating an example of the operation by the power control apparatus (the power controlling method) of the Example 13 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2K, first control of determining the value obtained by increasing the value less than or equal to the difference between the sum of the actual power demand of the electricity customer and the chargeable power less than or equal to the maximum charged power of the electric storage device 32, and the actual generated power of the fuel cell device 31B by multiplying by the first coefficient $\gamma$ as the power generation upper limit of the solar power generator 31A, or second control of determining the value obtained by increasing the difference between the actual power demand of the electricity customer and the sum of the actual generated power of the solar power generator 31A and the actual generated power of the fuel cell device 31B by multiplying by the second coefficient $\delta$ as the charged power or the discharged power of the electric storage device 32 is executed. Here, the first coefficient $\gamma$ is larger than the second coefficient $\delta$.

The "first control" in step S2K can easily be understood from the description of the Example 4 and detailed explanations will therefore be omitted. The "second control" in step S2K can easily be understood from the description of the Example 6 and detailed explanations will therefore be omitted.

By executing the first control of determining the value obtained by increasing the value less than or equal to the difference between the sum of the actual power demand of the electricity customer and the chargeable power less than or equal to the maximum charged power of the electric storage device 32, and the actual generated power of the fuel cell device 31B by multiplying by the first coefficient $\gamma$ as the power generation upper limit of the solar power generator 31A as described above, the present example can appropriately suppress the power purchase from the electric power system by the distributed power source system 10 as compared to a case where the control of determining the power generation upper limit of the solar power generator 31A is executed without increasing the value less than or equal to the difference.

Meanwhile, by executing the second control of determining the value obtained by increasing the difference between the actual power demand of the electricity customer and the sum of the actual generated power of the solar power generator 31A and the actual generated power of the fuel cell device 31B by multiplying by the second coefficient $\delta$ as the charged power or the discharged power of the electric storage device 32 as described above, the present example can appropriately suppress the power purchase from the electric power system by the distributed power source system 10 as compared to a case where the control of determining the charged power or the discharged power of the electric storage device 32 is executed without increasing the difference.

Here, assuming that the magnitudes of the first coefficient and the second coefficient are equal, it is highly likely that the operation and effect of the former first control for suppressing the power purchase from the electric power system is larger than the operation and effect of the latter second control. This is because the major portion of the power demand of the electricity customer is generally covered by the power supply from the distributed power generator 31 while the remaining portion is covered by the charged power or the discharged power of the electric storage device 32, and the generated power of the solar power generator 31A therefore tends to be larger than the charged power or the discharged power of the electric storage device 32 as a consequence.

Accordingly, by setting the first coefficient $\gamma$ in the first control larger than the second coefficient $\delta$ in the second control as in the present example, it is possible to appropriately suppress the power purchase from the electric power system by the distributed power source system 10 as compared to a case in which the magnitudes of the two values are equal or the magnitude relation between the two values is reversed.

The power controlling method, the power control apparatus 20, and the distributed power source system 10 of the present example may be the same as those of the first embodiment and any of the Examples 1 to 12 of the first embodiment except for the above-described features.

(EXAMPLE 14)

A power controlling method of the present example is the same as the first embodiment except for the configuration of the distributed power generator 31 and the contents of control by the control unit 22 to be described below.

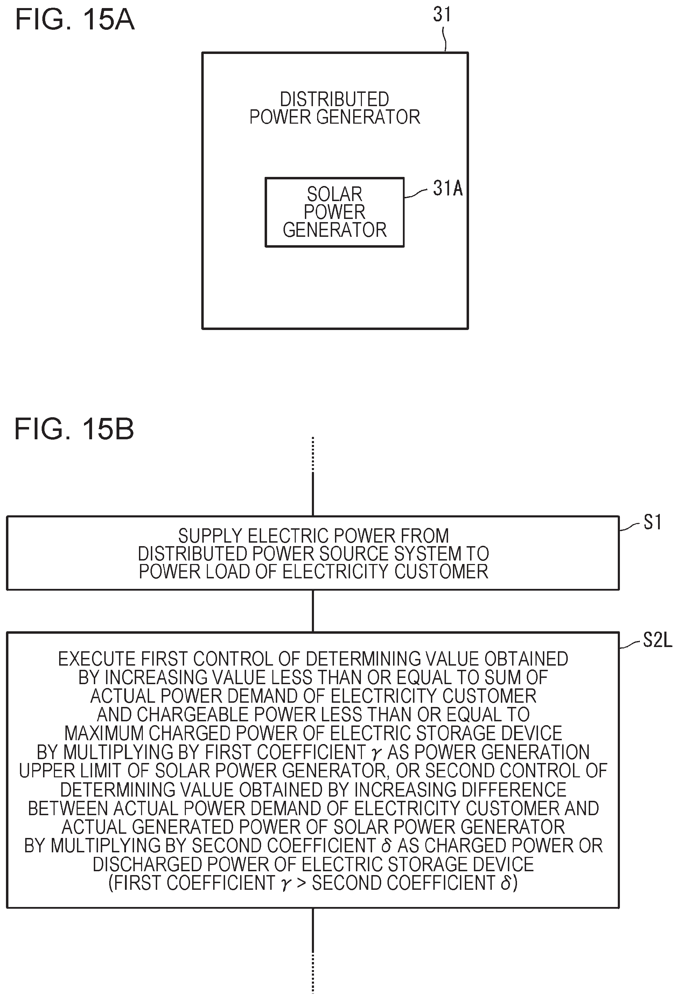

Fig. 15A is a diagram illustrating an example of a distributed power generator provided to a distributed power source system of Example 14 of the first embodiment.

In the example illustrated in Fig. 15A, the distributed power generator 31 includes the solar power generator 31A. However, the configuration of the solar power generator 31A is the same as that of the Example 1 and explanations will therefore be omitted.

Fig. 15B is a flowchart illustrating an example of the operation by the power control apparatus (the power controlling method) of the Example 14 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

First, in step S1, the electric power is supplied from the distributed power source system 10 to the power load 40 of the electricity customer.

Next, in step S2L, first control of determining the value obtained by increasing the value less than or equal to the sum of the actual power demand of the electricity customer and the chargeable power less than or equal to the maximum charged power of the electric storage device 32 by multiplying by the first coefficient $\gamma$ as the power generation upper limit of the solar power generator 31A, or second control of determining the value obtained by increasing the difference between the actual power demand of the electricity customer and the actual generated power of the solar power generator 31A by multiplying by the second coefficient $\delta$ as the charged power or the discharged power of the electric storage device 32 is executed. Here, the first coefficient $\gamma$ is larger than the second coefficient $\delta$.

The "first control" in step S2L can easily be understood from the description of the Example 5 and detailed explanations will therefore be omitted. The "second control" in step S2L can easily be understood from the description of the Example 7 and detailed explanations will therefore be omitted.

By executing the first control of determining the value obtained by increasing the value less than or equal to the sum of the actual power demand of the electricity customer and the chargeable power less than or equal to the maximum charged power of the electric storage device 32 by multiplying by the first coefficient $\gamma$ as the power generation upper limit of the solar power generator 31A as described above, the present example can appropriately suppress the power purchase from the electric power system by the distributed power source system 10 as compared to a case where the control of determining the power generation upper limit of the solar power generator 31A is executed without increasing the value less than or equal to the sum.

Meanwhile, by executing the second control of determining the value obtained by increasing the difference between the actual power demand of the electricity customer and the actual generated power of the solar power generator 31A by multiplying by the second coefficient $\delta$ as the charged power or the discharged power of the electric storage device 32 as described above, the present example can appropriately suppress the power purchase from the electric power system by the distributed power source system 10 as compared to a case where the control of determining the charged power or the discharged power of the electric storage device 32 is executed without increasing the difference.

Here, assuming that the magnitudes of the first coefficient and the second coefficient are equal, it is highly likely that the operation and effect of the former first control for suppressing the power purchase from the electric power system is larger than the operation and effect of the latter second control. This is because the major portion of the power demand of the electricity customer is generally covered by the power supply from the distributed power generator 31 while the remaining portion is covered by the charged power or the discharged power of the electric storage device 32, and the generated power of the solar power generator 31A therefore tends to be larger than the charged power or the discharged power of the electric storage device 32 as a consequence.

Accordingly, by setting the first coefficient $\gamma$ in the first control larger than the second coefficient $\delta$ in the second control as in the present example, it is possible to appropriately suppress the power purchase from the electric power system by the distributed power source system 10 as compared to a case in which the magnitudes of the two values are equal or the magnitude relation between the two values is reversed.

The power controlling method, the power control apparatus 20, and the distributed power source system 10 of the present example may be the same as those of the first embodiment and any of the Examples 1 to 13 of the first embodiment except for the above-described features.

(EXAMPLE 15)

A power controlling method of the present example is the same as the first embodiment except for the configuration of the distributed power generator 31 and the contents of control by the control unit 22 to be described below.

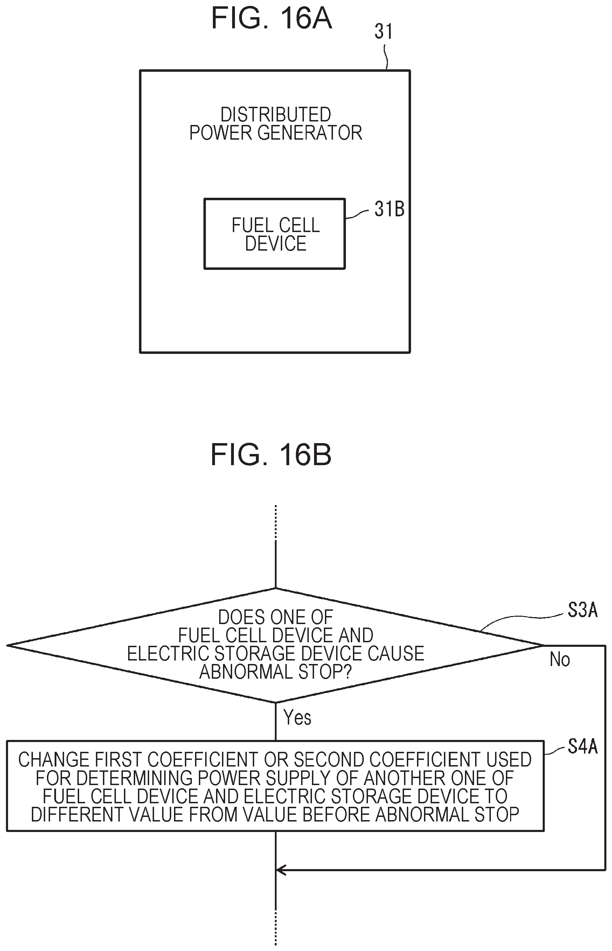

Fig. 16A is a diagram illustrating an example of a distributed power generator provided to a distributed power source system of Example 15 of the first embodiment.

In the example illustrated in Fig. 16A, the distributed power generator 31 includes the fuel cell device 31B. However, the configuration of the fuel cell device 31B is the same as that of the Example 1 and explanations will therefore be omitted.

Fig. 16B is a flowchart illustrating an example of the operation by the power control apparatus (the power controlling method) of the Example 15 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

When one of the fuel cell device 31B and the electric storage device 32 causes an abnormal stop when the electric power is supplied from the distributed power source system 10 to the power load 40 of the electricity customer (in a case of "Yes" in step S3A), the first coefficient or the second coefficient used for determining the power supply of the other one of the fuel cell device 31B and the electric storage device 32 is changed to a different value from a value before the abnormal stop in step S4A. Specifically, when the electric storage device 32 causes the abnormal stop, the first coefficient $\alpha$, the first coefficient $\beta$, or the first coefficient $\gamma$ should be changed such that any of these coefficients becomes larger than that before the abnormal stop. When the fuel cell device 31B causes the abnormal stop, the first coefficient $\gamma$ or the second coefficient $\delta$ should be changed such that any of these coefficients becomes larger than that before the abnormal stop. Note that the "first coefficient" and the "second coefficient" are the same as the above description and detailed explanations will therefore be omitted.

In the case where the distributed power generator 31 includes the fuel cell device 31B, the power purchase from the electric power system by the distributed power source system 10 may be brought about when one of the fuel cell device 31B and the electric storage device 32 causes the abnormal stop. For this reason, in the case where one of the fuel cell device 31B and the electric storage device 32 causes the abnormal stop, the first coefficient or the second coefficient used for determining the power supply of the other one of the fuel cell device 31B and the electric storage device 32 is changed to a desired value that is different from the value before the abnormal stop. Thus, the present example can appropriately suppress the power purchase from the electric power system by the distributed power source system 10 as compared to a case in which these coefficients are equal at the points before and after the abnormal stop.

The power controlling method, the power control apparatus 20, and the distributed power source system 10 of the present example may be the same as those of the first embodiment and any of the Examples 1 to 14 of the first embodiment except for the above-described features.

(EXAMPLE 16)

A power controlling method of the present example is the same as the first embodiment except for the configuration of the distributed power generator 31 and the contents of control by the control unit 22 to be described below.

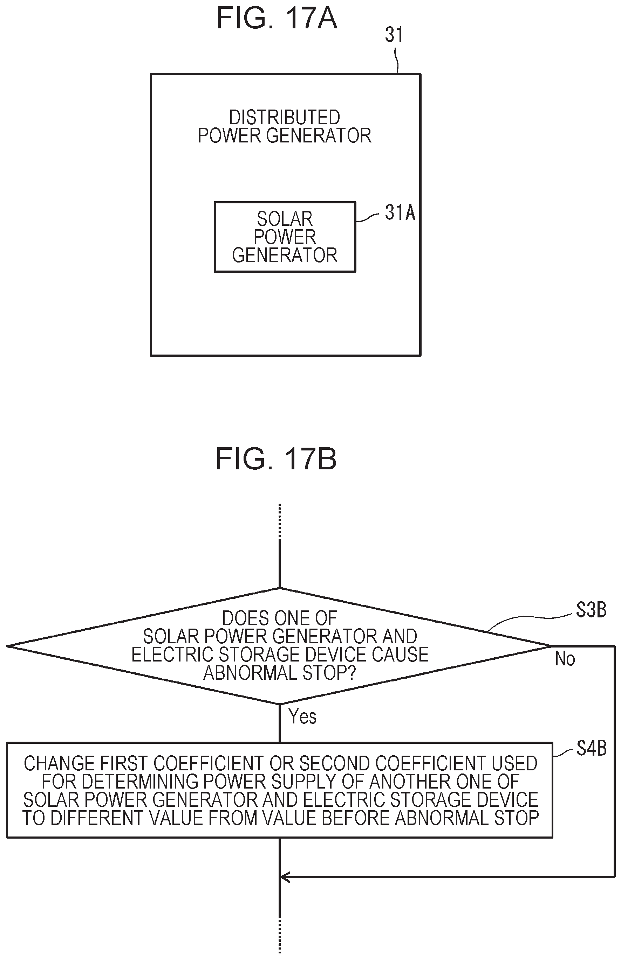

Fig. 17A is a diagram illustrating an example of a distributed power generator provided to a distributed power source system of Example 16 of the first embodiment.

In the example illustrated in Fig. 17A, the distributed power generator 31 includes the solar power generator 31A. However, the configuration of the solar power generator 31A is the same as that of the Example 1 and explanations will therefore be omitted.

Fig. 17B is a flowchart illustrating an example of the operation by the power control apparatus (the power controlling method) of the Example 16 of the first embodiment.

The following operation may be carried out by causing the arithmetic processing unit of the control unit 22 (see Fig. 2) of the power control apparatus 20 to read the control program out of the storage unit of the control unit 22, for example. However, it is not always essential for the control unit 22 to carry out the following operation. An operator may carry out part of the operation. The following example will explain a case in which the operation is controlled by the control unit 22.

When one of the solar power generator 31A and the electric storage device 32 causes an abnormal stop when the electric power is supplied from the distributed power source system 10 to the power load 40 of the electricity customer (in a case of "Yes" in step S3B), the first coefficient or the second coefficient used for determining the power supply of the other one of the solar power generator 31A and the electric storage device 32 is changed to a different value from a value before the abnormal stop in step S4B. Specifically, when the electric storage device 32 causes the abnormal stop, the first coefficient $\alpha$, the first coefficient $\beta$, or the first coefficient $\gamma$ should be changed such that any of these coefficients becomes larger than that before the abnormal stop. When the solar power generator 31A causes the abnormal stop, the first coefficient $\alpha$, the first coefficient $\beta$, or the second coefficient $\delta$ should be changed such that any of these coefficients becomes larger than that before the abnormal stop. The "first coefficient" and the "second coefficient" are the same as the above description and detailed explanations will therefore be omitted.

In the case where the distributed power generator 31 includes the solar power generator 31A, the power purchase from the electric power system by the distributed power source system 10 may be brought about when one of the solar power generator 31A and the electric storage device 32 causes the abnormal stop. For this reason, in the case where one of the solar power generator 31A and the electric storage device 32 causes the abnormal stop, the first coefficient or the second coefficient used for determining the power supply of the other one of the solar power generator 31A and the electric storage device 32 is changed to a desired value that is different from the value before the abnormal stop. Thus, the present example can appropriately suppress the power purchase from the electric power system by the distributed power source system 10 as compared to a case in which these coefficients are equal at the points before and after the abnormal stop.

The power controlling method, the power control apparatus 20, and the distributed power source system 10 of the present example may be the same as those of the first embodiment and any of the Examples 1 to 15 of the first embodiment except for the above-described features.

(SECOND EMBODIMENT)

[Apparatus configuration]

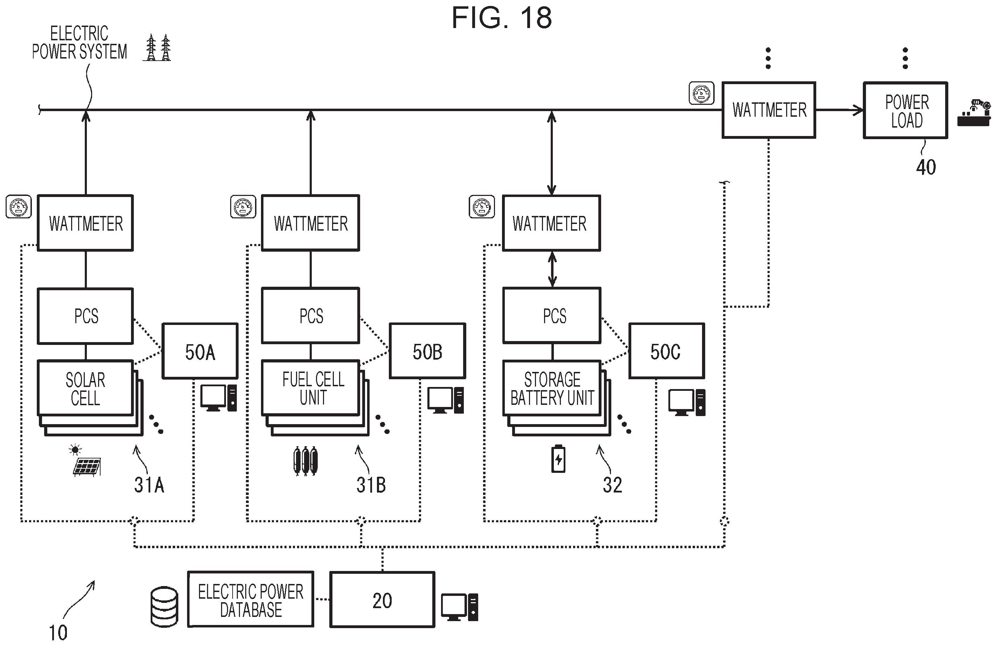

Fig. 18 is a diagram illustrating an example of a distributed power source system of a second embodiment. For the sake of convenience, solid lines and dashed lines in Fig. 18 represent paths to transmit electric power and paths to transmit signals, respectively.

As illustrated in Fig. 18, the distributed power source system 10 of the present embodiment includes the power control apparatus 20, the solar power generator 31A, the fuel cell device 31B, the electric storage device 32, and the control devices 50A to 50C. That is to say, in the example illustrated in Fig. 18, the distributed power generator 31 includes the solar power generator 31A and the fuel cell device 31B.

Here, the configuration inside the power control apparatus 20 is the same as that of the first embodiment and detailed explanations will therefore be omitted.

In the example illustrated in Fig. 18, the solar power generator 31A includes a solar cell cluster formed from multiple solar cells including solar panels. This solar cell cluster is formed into multiple groups by the multiple solar cells, and each of the multiple solar cells in each group is connected to the electric power system via a power conditioner (PCS) and a wattmeter. This wattmeter is connected to the power control apparatus 20 via the communication network. The number of the solar cells in each group is set to an appropriate value depending on output specifications of the distributed power source system 10 and the like.

The fuel cell device 31B includes a fuel cell unit cluster formed from multiple fuel cell units. This fuel cell unit cluster is formed into multiple groups by the multiple fuel cell units, and each of the multiple fuel cell units in each group is connected to the electric power system via a power conditioner (PCS) and a wattmeter. This wattmeter is connected to the power control apparatus 20 via the communication network. The number of the fuel cell units in each group is set to an appropriate value depending on the output specifications of the distributed power source system 10 and the like.

Although illustration is omitted, each of these fuel cell units is formed from a fuel cell stack that generates power by using hydrogen, auxiliary devices such as a pump and a valve, a control device that controls operations of these devices, and the like. In the case where the control device is not provided inside the fuel cell unit, the operations of aforementioned devices may be directly controlled by the control device 50A.

The electric storage device 32 includes a storage battery unit cluster formed from multiple storage battery units. This storage battery unit cluster is formed into multiple groups by the multiple storage battery units, and each of the multiple storage battery units in each group is connected to the electric power system via a power conditioner (PCS) and a wattmeter. This wattmeter is connected to the power control apparatus 20 via the communication network. The number of the storage battery units in each group is set to an appropriate value depending on the output specifications of the distributed power source system 10 and the like.

In addition, the solar power generator 31A, the fuel cell device 31B, and the electric storage device 32 are connected in parallel with one another via the electric power system, and are also connected to the power load 40 of the electricity customer via a wattmeter. This wattmeter is connected to the power control apparatus 20 via the communication network.

Nevertheless, the above-mentioned configuration of the distributed power source system 10 is merely exemplary and is not limited to this example. For instance, the fuel cell unit cluster may be formed into the group by a single group of the multiple fuel cell units or formed into the groups by single fuel cell units in the respective groups. The solar cell cluster may be formed into the group by a single group of the multiple solar cells or formed into the groups by single solar cells in the respective groups. The storage battery unit cluster may be formed into the group by a single group of the multiple storage battery units or formed into the groups by single storage battery units in the respective groups.

The control devices 50A to 50C are provided corresponding to the solar power generator 31A, the fuel cell device 31B, and the electric storage device 32, respectively, and are connected to the power control apparatus 20 by using the communication network.

The control device 50A may control output from the solar power generator 31A by controlling the power conditioner (PCS) via the communication network, or may cause a desired number of the solar cells to be paralleled off or paralleled on to the electric power system by using the power conditioner (PCS).

Meanwhile, the control device 50B may control output from each of these fuel cell units via the communication network so as to enable efficient operations (such as optimization of product lives) of the fuel cell units.

Meanwhile, the control device 50C may control the charged power or the discharged power of the electric storage device 32 by controlling the power conditioner (PCS) via the communication network.

It is to be noted, however, that the above description is merely exemplary and the present disclosure is not limited to these examples. For instance, the control unit 22 (see Fig. 2) of the power control apparatus 20 may directly control the operations of devices corresponding to the respective control devices 50A to 50C without the intermediary of the control devices 50A to 50C. Alternatively, the power control apparatus 20 may be integrated with the control devices 50A to 50C, or in other words, equipped with control functions of the control devices 50A to 50C and may directly control the operations of the devices corresponding to the respective control devices 50A to 50C.

Each of the control devices 50A to 50C only needs to have the control function, and includes an arithmetic processing unit (not illustrated), a storage unit that stores a control program, and a communication unit. Prescribed control is carried out in each of the control devices 50A to 50C by causing the arithmetic processing unit to read the control program stored in the storage unit and to execute the control program. The arithmetic processing unit is exemplified by a microprocessor, for instance. The storage unit is exemplified by a memory, for instance.

[Operation]

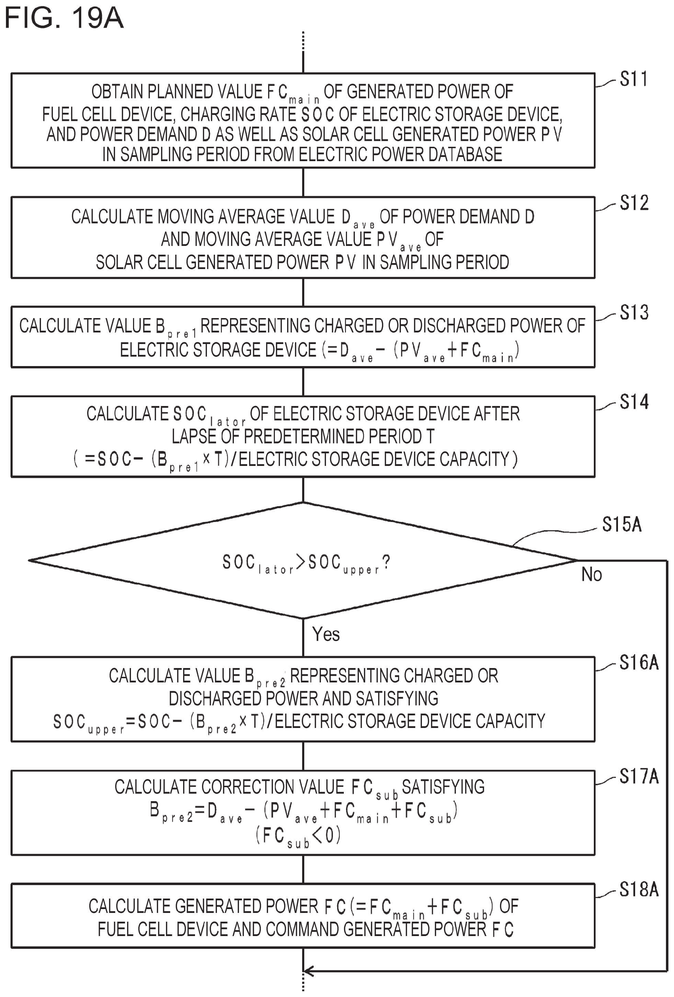

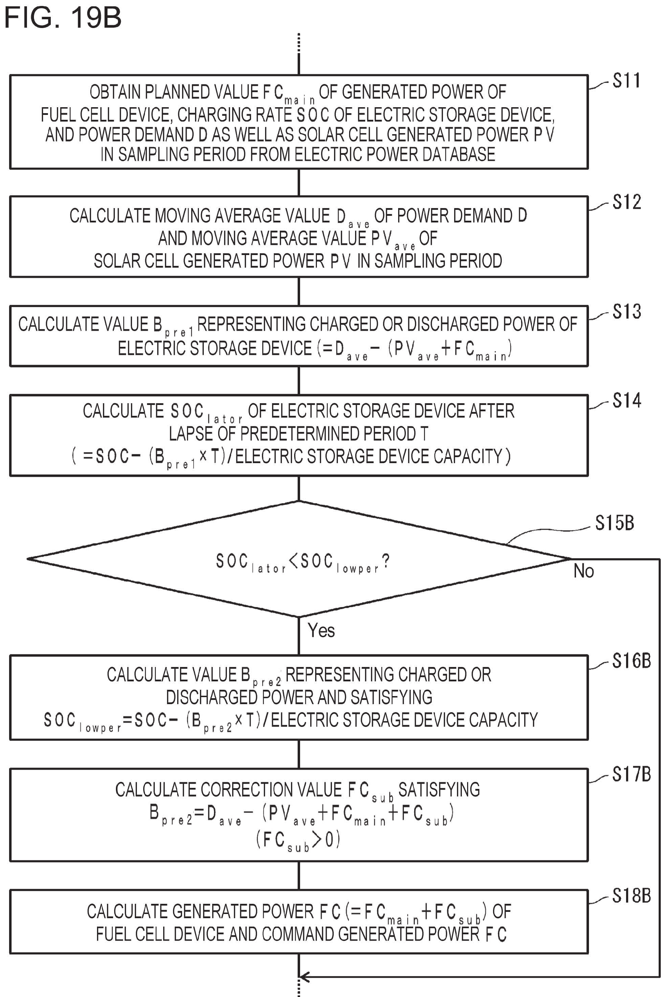

Figs. 19A and 19B are each a flowchart illustrating an example of an operation for determining the generated power of the fuel cell device by the power control apparatus of the second embodiment.

The following operations may be carried out by, for example, causing the arithmetic processing unit of the control unit 22 to read the control program out of the storage unit of the control unit 22. However, it is not always essential for the control unit 22 to carry out the following operations. An operator may carry out part of the operations. The following examples will each explain a case in which the operation is controlled by the control unit 22.

The operation of the power control apparatus 20 in Fig. 19A will be described below.

First, in step S11, a planned value $FC_{main}$ of generated power FC of the fuel cell device 31B, the charging rate SOC of the electric storage device 32, and all power demand D as well as all solar cell generated power PV in a sampling period (TD) are obtained from an electric power database. Here, the sampling period (TD) is set to a shorter period than a predetermined period (T) to be described later. Meanwhile, a period around 15 minutes can be taken as an example of the "sampling period", but the sampling period is not limited thereto.

Then, in step S12, a moving average value $D_{ave}$ of the power demand D and a moving average value $PV_{ave}$ of the solar cell generated power PV in the sampling period are calculated.

Next, in step S13, a value $B_{pre1}$ representing the charged power or the discharged power of the electric storage device 32 is calculated by the following formula (1):

$$B_{pre1} = D_{ave} - (PV_{ave} + FC_{main}) \qquad \qquad …(1).$$

Here, the value $B_{pre1}$ means the discharged power of the electric storage device 32 in the case of $B_{pre1} > 0$, and means the charged power of the electric storage device 32 in the case of $B_{pre1} < 0$.

Next, in step S14, a charging rate $SOC_{lator}$ of the electric storage device 32 after a lapse of the predetermined period (T) is calculated by the following formula (2). Here, the predetermined period (T) may be a period around 60 minutes but is not limited thereto:

$$SOC_{lator} = SOC - (B_{pre1} \times T) / \text{ electric storage device capacity} \qquad \qquad …(2).$$

Next, in step S15A, a determination is made as to whether or not the charging rate $SOC_{lator}$ is larger than an upper limit $SOC_{upper}$.

When the charging rate $SOC_{lator}$ is larger than the upper limit $SOC_{upper}$ (in a case of "Yes" in step S15A), a value $B_{pre2}$ representing the charged power or the discharged power of the electric storage device 32 and satisfying the following formula (3A) is calculated in step S16A:

$$SOC_{upper} = SOC - (B_{pre2} \times T) / \text{ electric storage device capacity} \qquad \qquad …(3A).$$

Here, the value $B_{pre2}$ means the discharged power of the electric storage device 32 in the case of $B_{pre2} > 0$, and means the charged power of the electric storage device 32 in the case of $B_{pre2} < 0$.

Next, the correction value $FC_{sub}$ for the generated power FC of the fuel cell device 31B which satisfies the following formula (4A) is calculated in step S17A ($FC_{sub} < 0$):

$$B_{pre2} = D_{ave} - (PV_{ave} + FC_{main} + FC_{sub}) \qquad \qquad …(4A).$$

Then, in step S18A, the generated power FC of the fuel cell device 31B is calculated by the following formula (5A), and the generated power FC is commanded:

$$FC = FC_{main} + FC_{sub} \qquad \qquad …(5A).$$

On the other hand, when the charging rate $SOC_{lator}$ is not larger than the upper limit $SOC_{upper}$ (in a case of "No" in step S15A), the generated power FC of the fuel cell device 31B is maintained in an unchanged state. Although the value $FC_{sub}$ is determined such that the charging rate $SOC_{lator}$ becomes equal to the upper limit $SOC_{upper}$, the present disclosure is not limited to this configuration. The value $FC_{sub}$ may be determined such that the charging rate $SOC_{lator}$ falls below the upper limit $SOC_{upper}$.

The operation of the power control apparatus 20 in Fig. 19B will be described below.

Note that steps S11 to S14 in Fig. 19B are the same as steps S11 to S14 in Fig. 19A, and explanations will therefore be omitted.

In step S15B, a determination is made as to whether or not the charging rate $SOC_{lator}$ is smaller than a lower limit $SOC_{lower}$.

When the charging rate $SOC_{lator}$ is smaller than the lower limit $SOC_{lower}$ (in a case of "Yes" in step S15B), the value $B_{pre2}$ representing the charged power or the discharged power of the electric storage device 32 and satisfying the following formula (3B) is calculated in step S16B:

$$SOC_{lower} = SOC-(B_{pre2} \times T)/ \text{ electric storage device capacity} \qquad \dots(3B).$$

Next, the correction value $FC_{sub}$ for the generated power FC of the fuel cell device 31B which satisfies the following formula (4B) is calculated in step S17B ($FC_{sub} > 0$):

$$B_{pre2} = D_{ave}-(PV_{ave}+FC_{main}+FC_{sub}) \qquad \dots(4B).$$

Then, in step S18B, the generated power FC of the fuel cell device 31B is calculated by the following formula (5B), and the generated power FC is commanded:

$$FC = FC_{main}+FC_{sub} \qquad \dots(5B).$$

On the other hand, when the charging rate $SOC_{lator}$ is not smaller than the lower limit $SOC_{lower}$ (in a case of "No" in step S15B), the generated power FC of the fuel cell device 31B is maintained in the unchanged state. Although the value $FC_{sub}$ is determined such that the charging rate $SOC_{lator}$ becomes equal to the lower limit $SOC_{lower}$, the present disclosure is not limited to this configuration. The value $FC_{sub}$ may be determined such that the charging rate $SOC_{lator}$ becomes larger than the lower limit $SOC_{lower}$.

According to the present embodiment described above, an example of the "correction value" (the correction value $FC_{sub}$) in the Example 2 of the first embodiment is derived as mentioned above. Meanwhile, by assigning zero to the value $PV_{ave}$ ($PV_{ave} = 0$) in each of the above-described arithmetic expressions, an example of the "correction value" (the correction value $FC_{sub}$) in the Example 3 of the first embodiment is derived.

The power controlling method, the power control apparatus 20, and the distributed power source system 10 of the present embodiment may be the same as those of the first embodiment and any of the Examples 1 to 16 of the first embodiment except for the above-described features.

Any of the first embodiment, the Examples 1 to 16 of the first embodiment, and the second embodiment may be combined with each other as long as such a combination does not exclude each other. From the above description, numerous improvements and other embodiments of the present disclosure are obvious to those skilled in the art. Accordingly, the above description should be interpreted to be solely exemplary, which is provided for the purpose of teaching those skilled in the art the best mode for embodying the present disclosure. Structures and/or detailed functions of the present disclosure can be substantially modified without departing from the gist thereof.

Industrial Applicability

An aspect of the present disclosure can be used for a power controlling method, a power control apparatus, and a distributed power source system, which are capable of reducing the possibility of implementation of power purchase from an electric power system as compared to the related art.

Reference Signs List

10 distributed power source system
20 power control apparatus
21 storage unit

22 control unit
31 distributed power generator
31A solar power generator
31B fuel cell device
32 electric storage device
40 power load
50A control device
50B control device
50C control device
α first coefficient
β first coefficient
γ first coefficient
δ second coefficient

## Claims

1. A power controlling method comprising:
determining power supply of a distributed power generator by using a first coefficient such that the power supply of the distributed power generator becomes larger than power demand of an electricity customer in a case of supplying electric power to a power load of the electricity customer from a distributed power source system including the distributed power generator and an electric storage device.

2. The power controlling method according to claim 1, wherein

    the distributed power generator includes a solar power generator and a fuel cell device, and
    the method determines a planned value of generated power of the fuel cell device in such a way as to satisfy a difference between a value increased by multiplying a predicted value of the power demand or actual power demand of the electricity customer by the first coefficient α and a predicted value of electric power or actual generated power of the solar power generator.

3. The power controlling method according to claim 1 or 2, wherein

    the distributed power generator includes a solar power generator and a fuel cell device, and
    the method determines a value obtained by adding up a planned value of generated power of the fuel cell device and a correction value for the planned value based on actual power demand of the electricity customer, actual generated power of the solar power generator, and the planned value of the generated power of the fuel cell device, and being increased by multiplying by the first coefficient β as the generated power of the fuel cell device.

4. The power controlling method according to claim 1 or 2, wherein

    the distributed power generator includes a fuel cell device, and
    the method determines a value obtained by adding up a planned value of generated power of the fuel cell device and a correction value for the planned value based on actual power demand of the electricity customer and the planned value of the generated power of the fuel cell device, and being increased by multiplying by the first coefficient β as the generated power of the fuel cell device.

5. The power controlling method according to claim 1 or 2, wherein

    the distributed power generator includes a solar power generator and a fuel cell device, and
    the method determines a value obtained by increasing a value less than or equal to a difference between a sum of actual power demand of the electricity customer and chargeable power less than or equal to maximum charged power of the electric storage device, and actual generated power of the fuel cell device by multiplying by the first coefficient γ as a power generation upper limit of the solar power generator.

6. The power controlling method according to claim 1 or 2, wherein

    the distributed power generator includes a solar power generator, and

the method determines a value obtained by increasing a value less than or equal to a sum of actual power demand of the electricity customer and chargeable power less than or equal to maximum charged power of the electric storage device by multiplying by the first coefficient $\gamma$ as a power generation upper limit of the solar power generator.

7. The power controlling method according to claim 1 or 2, wherein

the distributed power generator includes a solar power generator and a fuel cell device, and
the method determines a value obtained by increasing a difference between actual power demand of the electricity customer and a sum of actual generated power of the solar power generator and actual generated power of the fuel cell device by multiplying by a second coefficient $\delta$ as charged power or discharged power of the electric storage device.

8. The power controlling method according to claim 1 or 2, wherein

the distributed power generator includes a solar power generator, and
the method determines a value obtained by increasing a difference between actual power demand of the electricity customer and actual generated power of the solar power generator by multiplying by a second coefficient $\delta$ as charged power or discharged power of the electric storage device.

9. The power controlling method according to claim 1 or 2, wherein

the distributed power generator includes a fuel cell device, and
the method determines a value obtained by increasing a difference between actual power demand of the electricity customer and actual generated power of the fuel cell device by multiplying by a second coefficient $\delta$ as charged power or discharged power of the electric storage device.

10. The power controlling method according to any one of claims 1 to 6, wherein the first coefficient varies with seasons.

11. The power controlling method according to any one of claims 7 to 9, wherein the second coefficient varies with seasons.

12. The power controlling method according to claim 1 or 2, wherein

the distributed power generator includes a solar power generator and a fuel cell device,
the method executes

first control of determining a value obtained by adding up a planned value of generated power of the fuel cell device and a correction value for the planned value based on actual power demand of the electricity customer, actual generated power of the solar power generator, and the planned value of the generated power of the fuel cell device, and being increased by multiplying by the first coefficient $\beta$ as the generated power of the fuel cell device, or
second control of determining a value obtained by increasing a difference between the actual power demand of the electricity customer and a sum of the actual generated power of the solar power generator and actual generated power of the fuel cell device by multiplying by the second coefficient $\delta$ as charged power or discharged power of the electric storage device, and

the first coefficient $\beta$ is larger than the second coefficient $\delta$.

13. The power controlling method according to claim 1 or 2, wherein

the distributed power generator includes a fuel cell device,
the method executes

first control of determining a value obtained by adding up a planned value of generated power of the fuel cell device and a correction value for the planned value based on actual power demand of the electricity customer and the planned value of the generated power of the fuel cell device, and being increased by multiplying by the first coefficient $\beta$ as the generated power of the fuel cell device, or

second control of determining a value obtained by increasing a difference between the actual power demand of the electricity customer and actual generated power of the fuel cell device by multiplying by the second coefficient $\delta$ as charged power or discharged power of the electric storage device, and

the first coefficient $\beta$ is larger than the second coefficient $\delta$.

14. The power controlling method according to claim 1 or 2, wherein

the distributed power generator includes a solar power generator and a fuel cell device,
the method executes

first control of determining a value obtained by increasing a value less than or equal to a difference between a sum of actual power demand of the electricity customer and chargeable power less than or equal to maximum charged power of the electric storage device, and actual generated power of the fuel cell device by multiplying by the first coefficient $\gamma$ as a power generation upper limit of the solar power generator, or
second control of determining a value obtained by increasing a difference between the actual power demand of the electricity customer and a sum of actual generated power of the solar power generator and the actual generated power of the fuel cell device by multiplying by the second coefficient $\delta$ as charged power or discharged power of the electric storage device, and

the first coefficient $\gamma$ is larger than the second coefficient $\delta$.

15. The power controlling method according to claim 1 or 2, wherein

the distributed power generator includes a solar power generator,
the method executes

first control of determining a value obtained by increasing a value less than or equal to a sum of actual power demand of the electricity customer and chargeable power less than or equal to maximum charged power of the electric storage device by multiplying by the first coefficient $\gamma$ as a power generation upper limit of the solar power generator, or
second control of determining a value obtained by increasing a difference between the actual power demand of the electricity customer and actual generated power of the solar power generator by multiplying by the second coefficient $\delta$ as charged power or discharged power of the electric storage device, and

the first coefficient $\gamma$ is larger than the second coefficient $\delta$.

16. The power controlling method according to claim 1, wherein

the distributed power generator includes a fuel cell device, and
when one of the fuel cell device and the electric storage device causes an abnormal stop, the first coefficient or the second coefficient used for determining power supply of another one of the fuel cell device and the electric storage device is changed to a different value from a value before the abnormal stop.

17. The power controlling method according to claim 1, wherein

the distributed power generator includes a solar power generator, and
when one of the solar power generator and the electric storage device causes an abnormal stop, the first coefficient or the second coefficient used for determining power supply of another one of the solar power generator and the electric storage device is changed to a different value from a value before the abnormal stop.

18. A power control apparatus comprising:

a storage unit configured to store power demand of an electricity customer; and
a control unit configured to determine power supply of a distributed power generator by using a first coefficient such that the power supply of the distributed power generator becomes larger than the power demand of the electricity customer in a case of supplying electric power from a distributed power source system including the distributed power generator and an electric storage device to a power load of the electricity customer.

**19.** A distributed power source system comprising:

a distributed power generator;
an electric storage device; and
the power control apparatus according to claim 18.

# FIG. 1

# FIG. 2

# FIG. 3

SUPPLY ELECTRIC POWER FROM
DISTRIBUTED POWER SOURCE SYSTEM TO
POWER LOAD OF ELECTRICITY CUSTOMER — S1

POWER SUPPLY OF DISTRIBUTED POWER GENERATOR IS
DETERMINED BY USING FIRST COEFFICIENT SUCH THAT
POWER SUPPLY BECOMES LARGER THAN
POWER DEMAND OF ELECTRICITY CUSTOMER — S2

# FIG. 4A

```
┌────────────────────────────────┐ 31
│      DISTRIBUTED               │
│   POWER GENERATOR              │
│                                │
│   ┌──────────────┐  31A       │
│   │   SOLAR      │             │
│   │   POWER      │             │
│   │  GENERATOR   │             │
│   └──────────────┘             │
│                                │
│   ┌──────────────┐  31B       │
│   │  FUEL CELL   │             │
│   │   DEVICE     │             │
│   └──────────────┘             │
│                                │
└────────────────────────────────┘
```

# FIG. 4B

┊

┌──────────────────────────────────────────────────────────────┐ S1
│           SUPPLY ELECTRIC POWER FROM                          │
│   DISTRIBUTED POWER SOURCE SYSTEM TO                          │
│     POWER LOAD OF ELECTRICITY CUSTOMER                        │
└──────────────────────────────────────────────────────────────┘

┌──────────────────────────────────────────────────────────────┐ S2A
│     DETERMINE PLANNED VALUE OF GENERATED POWER OF             │
│ FUEL CELL DEVICE IN SUCH A WAY AS TO SATISFY DIFFERENCE       │
│ BETWEEN VALUE INCREASED BY MULTIPLYING PREDICTED             │
│ VALUE OF POWER DEMAND OR ACTUAL POWER DEMAND OF              │
│ ELECTRICITY CUSTOMER BY FIRST COEFFICIENT $\alpha$ AND       │
│         PREDICTED VALUE OF ELECTRIC POWER OR                  │
│ ACTUAL GENERATED POWER OF SOLAR POWER GENERATOR              │
└──────────────────────────────────────────────────────────────┘

┊

# FIG. 5A

31
DISTRIBUTED POWER GENERATOR

31A
SOLAR POWER GENERATOR

31B
FUEL CELL DEVICE

# FIG. 5B

**S1** — SUPPLY ELECTRIC POWER FROM DISTRIBUTED POWER SOURCE SYSTEM TO POWER LOAD OF ELECTRICITY CUSTOMER

**S2B** — DETERMINE VALUE OBTAINED BY ADDING UP PLANNED VALUE OF GENERATED POWER OF FUEL CELL DEVICE AND CORRECTION VALUE FOR PLANNED VALUE BASED ON ACTUAL POWER DEMAND OF ELECTRICITY CUSTOMER, ACTUAL GENERATED POWER OF SOLAR POWER GENERATOR, AND PLANNED VALUE OF GENERATED POWER OF FUEL CELL DEVICE, AND BEING INCREASED BY MULTIPLYING BY FIRST COEFFICIENT $\beta$ AS GENERATED POWER OF FUEL CELL DEVICE

# FIG. 6A

31

DISTRIBUTED
POWER GENERATOR

FUEL CELL
DEVICE — 31B

# FIG. 6B

SUPPLY ELECTRIC POWER FROM
DISTRIBUTED POWER SOURCE SYSTEM TO
POWER LOAD OF ELECTRICITY CUSTOMER — S1

DETERMINE VALUE OBTAINED BY ADDING UP PLANNED VALUE
OF GENERATED POWER OF FUEL CELL DEVICE AND
CORRECTION VALUE FOR PLANNED VALUE BASED ON
ACTUAL POWER DEMAND OF ELECTRICITY CUSTOMER AND
PLANNED VALUE OF GENERATED POWER OF FUEL CELL DEVICE,
AND BEING INCREASED BY MULTIPLYING BY FIRST
COEFFICIENT $\beta$ AS GENERATED POWER OF FUEL CELL DEVICE — S2C

# FIG. 7A

31

DISTRIBUTED
POWER GENERATOR

SOLAR
POWER
GENERATOR — 31A

FUEL CELL
DEVICE — 31B

# FIG. 7B

SUPPLY ELECTRIC POWER FROM
DISTRIBUTED POWER SOURCE SYSTEM TO
POWER LOAD OF ELECTRICITY CUSTOMER — S1

DETERMINE VALUE OBTAINED BY INCREASING VALUE LESS THAN
OR EQUAL TO DIFFERENCE BETWEEN SUM OF ACTUAL POWER
DEMAND OF ELECTRICITY CUSTOMER AND CHARGEABLE POWER
LESS THAN OR EQUAL TO MAXIMUM CHARGED POWER OF
ELECTRIC STORAGE DEVICE, AND ACTUAL GENERATED POWER OF
FUEL CELL DEVICE BY MULTIPLYING BY FIRST COEFFICIENT $\gamma$ AS
POWER GENERATION UPPER LIMIT OF SOLAR POWER GENERATOR — S2D

# FIG. 8A

31

DISTRIBUTED
POWER GENERATOR

SOLAR
POWER
GENERATOR

31A

# FIG. 8B

SUPPLY ELECTRIC POWER FROM
DISTRIBUTED POWER SOURCE SYSTEM TO
POWER LOAD OF ELECTRICITY CUSTOMER

S1

DETERMINE VALUE OBTAINED BY INCREASING VALUE LESS THAN
OR EQUAL TO SUM OF ACTUAL POWER DEMAND OF
ELECTRICITY CUSTOMER AND CHARGEABLE POWER LESS THAN
OR EQUAL TO MAXIMUM CHARGED POWER OF ELECTRIC
STORAGE DEVICE BY MULTIPLYING BY FIRST COEFFICIENT $\gamma$ AS
POWER GENERATION UPPER LIMIT OF SOLAR POWER GENERATOR

S2E

# FIG. 9A

31

DISTRIBUTED
POWER GENERATOR

SOLAR
POWER
GENERATOR — 31A

FUEL CELL
DEVICE — 31B

# FIG. 9B

SUPPLY ELECTRIC POWER FROM
DISTRIBUTED POWER SOURCE SYSTEM TO
POWER LOAD OF ELECTRICITY CUSTOMER — S1

DETERMINE VALUE OBTAINED BY INCREASING DIFFERENCE
BETWEEN ACTUAL POWER DEMAND OF ELECTRICITY CUSTOMER
AND SUM OF ACTUAL GENERATED POWER OF SOLAR POWER
GENERATOR AND ACTUAL GENERATED POWER OF
FUEL CELL DEVICE BY MULTIPLYING BY SECOND COEFFICIENT $\delta$
AS CHARGED POWER OR DISCHARGED POWER OF
ELECTRIC STORAGE DEVICE — S2F

# FIG. 10A

31

DISTRIBUTED
POWER GENERATOR

SOLAR
POWER
GENERATOR — 31A

# FIG. 10B

| SUPPLY ELECTRIC POWER FROM DISTRIBUTED POWER SOURCE SYSTEM TO POWER LOAD OF ELECTRICITY CUSTOMER | — S1 |

| DETERMINE VALUE OBTAINED BY INCREASING DIFFERENCE BETWEEN ACTUAL POWER DEMAND OF ELECTRICITY CUSTOMER AND ACTUAL GENERATED POWER OF SOLAR POWER GENERATOR BY MULTIPLYING BY SECOND COEFFICIENT $\delta$ AS CHARGED POWER OR DISCHARGED POWER OF ELECTRIC STORAGE DEVICE | — S2G |

# FIG. 11A

31

DISTRIBUTED
POWER GENERATOR

FUEL CELL
DEVICE — 31B

# FIG. 11B

SUPPLY ELECTRIC POWER FROM
DISTRIBUTED POWER SOURCE SYSTEM TO
POWER LOAD OF ELECTRICITY CUSTOMER — S1

DETERMINE VALUE OBTAINED BY INCREASING DIFFERENCE
BETWEEN ACTUAL POWER DEMAND OF ELECTRICITY CUSTOMER
AND ACTUAL GENERATED POWER OF FUEL CELL DEVICE
BY MULTIPLYING BY SECOND COEFFICIENT $\delta$ AS CHARGED POWER
OR DISCHARGED POWER OF ELECTRIC STORAGE DEVICE — S2H

## FIG. 12A

31

DISTRIBUTED
POWER GENERATOR

SOLAR
POWER
GENERATOR — 31A

FUEL CELL
DEVICE — 31B

## FIG. 12B

SUPPLY ELECTRIC POWER FROM
DISTRIBUTED POWER SOURCE SYSTEM TO
POWER LOAD OF ELECTRICITY CUSTOMER — S1

EXECUTE FIRST CONTROL OF DETERMINING VALUE OBTAINED
BY ADDING UP PLANNED VALUE OF GENERATED POWER OF
FUEL CELL DEVICE AND CORRECTION VALUE FOR PLANNED VALUE
BASED ON ACTUAL POWER DEMAND OF ELECTRICITY CUSTOMER,
ACTUAL GENERATED POWER OF SOLAR POWER GENERATOR,
AND PLANNED VALUE OF GENERATED POWER OF FUEL CELL DEVICE,
AND BEING INCREASED BY MULTIPLYING BY FIRST COEFFICIENT $\beta$ AS
GENERATED POWER OF FUEL CELL DEVICE, OR SECOND CONTROL OF
DETERMINING VALUE OBTAINED BY INCREASING DIFFERENCE BETWEEN
ACTUAL POWER DEMAND OF ELECTRICITY CUSTOMER AND SUM OF
ACTUAL GENERATED POWER OF SOLAR POWER GENERATOR AND
ACTUAL GENERATED POWER OF FUEL CELL DEVICE BY MULTIPLYING
BY SECOND COEFFICIENT $\delta$ AS CHARGED POWER OR
DISCHARGED POWER OF ELECTRIC STORAGE DEVICE
(FIRST COEFFICIENT $\beta$ > SECOND COEFFICIENT $\delta$) — S21

## FIG. 13A

31

```
┌─────────────────────────────────┐
│                                 │
│      DISTRIBUTED                │
│    POWER GENERATOR              │
│                                 │
│                                 │
│      ┌──────────────┐  31B      │
│      │  FUEL CELL   │           │
│      │   DEVICE     │           │
│      └──────────────┘           │
│                                 │
└─────────────────────────────────┘
```

## FIG. 13B

SUPPLY ELECTRIC POWER FROM
DISTRIBUTED POWER SOURCE SYSTEM TO
POWER LOAD OF ELECTRICITY CUSTOMER — S1

EXECUTE FIRST CONTROL OF DETERMINING VALUE OBTAINED
BY ADDING UP PLANNED VALUE OF GENERATED POWER OF
FUEL CELL DEVICE AND CORRECTION VALUE FOR PLANNED VALUE
BASED ON ACTUAL POWER DEMAND OF ELECTRICITY CUSTOMER AND
PLANNED VALUE OF GENERATED POWER OF FUEL CELL DEVICE,
AND BEING INCREASED BY MULTIPLYING BY FIRST COEFFICIENT $\beta$ AS
GENERATED POWER OF FUEL CELL DEVICE, OR SECOND CONTROL OF
DETERMINING VALUE OBTAINED BY INCREASING DIFFERENCE BETWEEN
ACTUAL POWER DEMAND OF ELECTRICITY CUSTOMER AND
ACTUAL GENERATED POWER OF FUEL CELL DEVICE BY MULTIPLYING
BY SECOND COEFFICIENT $\delta$ AS CHARGED POWER
OR DISCHARGED POWER OF ELECTRIC STORAGE DEVICE
(FIRST COEFFICIENT $\beta$ > SECOND COEFFICIENT $\delta$) — S2J

## FIG. 14A

```
                                           31
       ┌─────────────────────────────────┐
       │        DISTRIBUTED              │
       │     POWER GENERATOR             │
       │                                 │
       │   ┌─────────────────┐    31A    │
       │   │  SOLAR          │           │
       │   │  POWER          │           │
       │   │  GENERATOR      │           │
       │   └─────────────────┘           │
       │                                 │
       │   ┌─────────────────┐    31B    │
       │   │  FUEL CELL      │           │
       │   │  DEVICE         │           │
       │   └─────────────────┘           │
       │                                 │
       └─────────────────────────────────┘
```

## FIG. 14B

| |
|---|
| SUPPLY ELECTRIC POWER FROM DISTRIBUTED POWER SOURCE SYSTEM TO POWER LOAD OF ELECTRICITY CUSTOMER — S1 |

| |
|---|
| EXECUTE FIRST CONTROL OF DETERMINING VALUE OBTAINED BY INCREASING VALUE LESS THAN OR EQUAL TO DIFFERENCE BETWEEN SUM OF ACTUAL POWER DEMAND OF ELECTRICITY CUSTOMER AND CHARGEABLE POWER LESS THAN OR EQUAL TO MAXIMUM CHARGED POWER OF ELECTRIC STORAGE DEVICE, AND ACTUAL GENERATED POWER OF FUEL CELL DEVICE BY MULTIPLYING BY FIRST COEFFICIENT $\gamma$ AS POWER GENERATION UPPER LIMIT OF SOLAR POWER GENERATOR, OR SECOND CONTROL OF DETERMINING VALUE OBTAINED BY INCREASING VALUE LESS THAN OR EQUAL TO DIFFERENCE BETWEEN ACTUAL POWER DEMAND OF ELECTRICITY CUSTOMER AND SUM OF ACTUAL GENERATED POWER OF SOLAR POWER GENERATOR AND ACTUAL GENERATED POWER OF FUEL CELL DEVICE BY MULTIPLYING BY SECOND COEFFICIENT $\delta$ AS CHARGED POWER OR DISCHARGED POWER OF ELECTRIC STORAGE DEVICE (FIRST COEFFICIENT $\gamma$ > SECOND COEFFICIENT $\delta$) — S2K |

## FIG. 15A

31

DISTRIBUTED
POWER GENERATOR

SOLAR
POWER
GENERATOR

31A

## FIG. 15B

SUPPLY ELECTRIC POWER FROM
DISTRIBUTED POWER SOURCE SYSTEM TO
POWER LOAD OF ELECTRICITY CUSTOMER

S1

EXECUTE FIRST CONTROL OF DETERMINING VALUE OBTAINED
BY INCREASING VALUE LESS THAN OR EQUAL TO SUM OF
ACTUAL POWER DEMAND OF ELECTRICITY CUSTOMER
AND CHARGEABLE POWER LESS THAN OR EQUAL TO
MAXIMUM CHARGED POWER OF ELECTRIC STORAGE DEVICE
BY MULTIPLYING BY FIRST COEFFICIENT $\gamma$ AS POWER GENERATION
UPPER LIMIT OF SOLAR POWER GENERATOR, OR SECOND CONTROL OF
DETERMINING VALUE OBTAINED BY INCREASING DIFFERENCE
BETWEEN ACTUAL POWER DEMAND OF ELECTRICITY CUSTOMER AND
ACTUAL GENERATED POWER OF SOLAR POWER GENERATOR
BY MULTIPLYING BY SECOND COEFFICIENT $\delta$ AS CHARGED POWER OR
DISCHARGED POWER OF ELECTRIC STORAGE DEVICE
(FIRST COEFFICIENT $\gamma$ > SECOND COEFFICIENT $\delta$)

S2L

# FIG. 16A

31

DISTRIBUTED
POWER GENERATOR

FUEL CELL
DEVICE — 31B

# FIG. 16B

DOES ONE OF
FUEL CELL DEVICE AND
ELECTRIC STORAGE DEVICE CAUSE
ABNORMAL STOP? — S3A

No

Yes

CHANGE FIRST COEFFICIENT OR SECOND COEFFICIENT USED
FOR DETERMINING POWER SUPPLY OF ANOTHER ONE OF
FUEL CELL DEVICE AND ELECTRIC STORAGE DEVICE TO
DIFFERENT VALUE FROM VALUE BEFORE ABNORMAL STOP — S4A

# FIG. 17A

DISTRIBUTED
POWER GENERATOR                              31

SOLAR
POWER            31A
GENERATOR

# FIG. 17B

DOES ONE OF
SOLAR POWER GENERATOR AND
ELECTRIC STORAGE DEVICE CAUSE
ABNORMAL STOP?                                    S3B

No

Yes

CHANGE FIRST COEFFICIENT OR SECOND COEFFICIENT USED
FOR DETERMINING POWER SUPPLY OF ANOTHER ONE OF
SOLAR POWER GENERATOR AND ELECTRIC STORAGE DEVICE
TO DIFFERENT VALUE FROM VALUE BEFORE ABNORMAL STOP         S4B

# FIG. 18

EP 4 787 660 A1

## FIG. 19A

S11 — OBTAIN PLANNED VALUE $FC_{main}$ OF GENERATED POWER OF FUEL CELL DEVICE, CHARGING RATE $SOC$ OF ELECTRIC STORAGE DEVICE, AND POWER DEMAND $D$ AS WELL AS SOLAR CELL GENERATED POWER $PV$ IN SAMPLING PERIOD FROM ELECTRIC POWER DATABASE

S12 — CALCULATE MOVING AVERAGE VALUE $D_{ave}$ OF POWER DEMAND $D$ AND MOVING AVERAGE VALUE $PV_{ave}$ OF SOLAR CELL GENERATED POWER $PV$ IN SAMPLING PERIOD

S13 — CALCULATE VALUE $B_{pre1}$ REPRESENTING CHARGED OR DISCHARGED POWER OF ELECTRIC STORAGE DEVICE $(=D_{ave}-(PV_{ave}+FC_{main}))$

S14 — CALCULATE $SOC_{lator}$ OF ELECTRIC STORAGE DEVICE AFTER LAPSE OF PREDETERMINED PERIOD T $(=SOC-(B_{pre1}\times T)/\text{ELECTRIC STORAGE DEVICE CAPACITY})$

S15A — $SOC_{lator}>SOC_{upper}$?

No

Yes

S16A — CALCULATE VALUE $B_{pre2}$ REPRESENTING CHARGED OR DISCHARGED POWER AND SATISFYING $SOC_{upper}=SOC-(B_{pre2}\times T)/\text{ELECTRIC STORAGE DEVICE CAPACITY}$

S17A — CALCULATE CORRECTION VALUE $FC_{sub}$ SATISFYING $B_{pre2}=D_{ave}-(PV_{ave}+FC_{main}+FC_{sub})$ $(FC_{sub}<0)$

S18A — CALCULATE GENERATED POWER $FC (=FC_{main}+FC_{sub})$ OF FUEL CELL DEVICE AND COMMAND GENERATED POWER $FC$

## FIG. 19B

OBTAIN PLANNED VALUE $FC_{main}$ OF GENERATED POWER OF FUEL CELL DEVICE, CHARGING RATE $SOC$ OF ELECTRIC STORAGE DEVICE, AND POWER DEMAND D AS WELL AS SOLAR CELL GENERATED POWER $PV$ IN SAMPLING PERIOD FROM ELECTRIC POWER DATABASE — S11

CALCULATE MOVING AVERAGE VALUE $D_{ave}$ OF POWER DEMAND D AND MOVING AVERAGE VALUE $PV_{ave}$ OF SOLAR CELL GENERATED POWER $PV$ IN SAMPLING PERIOD — S12

CALCULATE VALUE $B_{pre1}$ REPRESENTING CHARGED OR DISCHARGED POWER OF ELECTRIC STORAGE DEVICE $(=D_{ave}-(PV_{ave}+FC_{main})$ — S13

CALCULATE $SOC_{lator}$ OF ELECTRIC STORAGE DEVICE AFTER LAPSE OF PREDETERMINED PERIOD T $(=SOC-(B_{pre1}\times T)/$ELECTRIC STORAGE DEVICE CAPACITY$)$ — S14

$SOC_{lator}<SOC_{lowper}$? — S15B

No

Yes

CALCULATE VALUE $B_{pre2}$ REPRESENTING CHARGED OR DISCHARGED POWER AND SATISFYING $SOC_{lowper}=SOC-(B_{pre2}\times T)/$ELECTRIC STORAGE DEVICE CAPACITY — S16B

CALCULATE CORRECTION VALUE $FC_{sub}$ SATISFYING $B_{pre2}=D_{ave}-(PV_{ave}+FC_{main}+FC_{sub})$ $(FC_{sub}>0)$ — S17B

CALCULATE GENERATED POWER $FC$ $(=FC_{main}+FC_{sub})$ OF FUEL CELL DEVICE AND COMMAND GENERATED POWER $FC$ — S18B

## INTERNATIONAL SEARCH REPORT

| International application No. |
| --- |
| **PCT/JP2024/032186** |

**A. CLASSIFICATION OF SUBJECT MATTER**

*H02J 3/46*(2006.01)i; *H02J 3/00*(2006.01)i; *H02J 3/32*(2006.01)i; *H02J 3/38*(2006.01)i
FI: H02J3/46; H02J3/32; H02J3/38 110; H02J3/00 130; H02J3/00 170; H02J3/38 130; H02J3/38 170

According to International Patent Classification (IPC) or to both national classification and IPC

**B. FIELDS SEARCHED**

Minimum documentation searched (classification system followed by classification symbols)

H02J3/46; H02J3/00; H02J3/32; H02J3/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-136258 A (KYOCERA CORPORATION) 27 July 2015 (2015-07-27) paragraphs [0046]-[0047], [0049]-[0052], fig. 1-3 | 1-19 |
| A | WO 2013/141039 A1 (TOSHIBA KK) 26 September 2013 (2013-09-26) paragraphs [0011]-[0040], fig. 1-9 | 1-19 |
| A | JP 2003-189478 A (HITACHI, LTD.) 04 July 2003 (2003-07-04) paragraphs [0006]-[0011], fig. 1 | 1-19 |
| A | JP 2021-170857 A (SHIMIZU CONSTRUCTION CO., LTD.) 28 October 2021 (2021-10-28) paragraphs [0034]-[0037], fig. 1, 6 | 1-19 |
| A | JP 2015-65770 A (SILICON PLUS CORP.) 09 April 2015 (2015-04-09) paragraphs [0005], [0021]-[0024], [0036], fig. 1-2 | 1-19 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **05 November 2024** | **19 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/032186**

| Patent document cited in search report | | | Publication date (day/month/year) | Patent family member(s) | Publication date (day/month/year) |
|---|---|---|---|---|---|
| JP | 2015-136258 | A | 27 July 2015 | (Family: none) | |
| WO | 2013/141039 | A1 | 26 September 2013 | US 2013/0253719 A1 paragraphs [0020]-[0064], fig. 1-9 EP 2830184 A1 | |
| JP | 2003-189478 | A | 04 July 2003 | (Family: none) | |
| JP | 2021-170857 | A | 28 October 2021 | (Family: none) | |
| JP | 2015-65770 | A | 09 April 2015 | (Family: none) | |

Form PCT/ISA/210 (patent family annex) (July 2022)

**REFERENCES CITED IN THE DESCRIPTION**

**Patent documents cited in the description**

- JP 2004208426 A